# EUROPÄISCHE PATENTSCHRIFT

(11) **EP 2 694 618 B1**
(45) Veröffentlichungstag und Bekanntmachung des Hinweises auf die Patenterteilung: **28.01.2015**
(21) Anmeldenummer: 12711647.3
(22) Anmeldetag: 02.04.2012
(51) Int. Cl.: C09K 8/588

(54) **VERFAHREN ZUM FÖRDERN VON ERDÖL AUS UNTERIRDISCHEN FORMATIONEN**
PROCESS FOR PRODUCING MINERAL OIL FROM UNDERGROUND FORMATIONS
PROCÉDÉ POUR L'EXPLOITATION DE PÉTROLE À PARTIR DE FORMATIONS SOUTERRAINES

(30) Priorität: 08.04.2011 EP 11161724
(43) Veröffentlichungstag der Anmeldung: 12.02.2014
(73) Patentinhaber: BASF SE, 67056 Ludwigshafen (DE); BASF Canada Inc., Toronto, Ontario M9W 6N9 (CA)
(72) Erfinder: REICHENBACH-KLINKE, Roland, 83278 Traunstein (DE); AßMANN, Andrea, 83567 Unterreit (DE); LANGLOTZ, Björn, 83308 Trostberg (DE); SPINDLER, Christian, Houston, TX 77062 (US); GIESBRECHT, Russell, Calgary, AB T2Z 4E4 (CA)
(74) Vertreter: Poganiuch, Peter
(86) Internationale Anmeldenummer: PCT/EP2012/055934
(87) Internationale Veröffentlichungsnummer: WO 2012/136613

(56) Entgegenhaltungen:
- WO-A1-2011/015520
- WO-A1-2012/069438
- WO-A1-2012/069477
- WO-A1-2012/069478
- WO-A2-2010/133527
- US-A- 3 908 760
- US-A- 4 776 398
- US-A1- 2010 292 109

## Beschreibung

Die vorliegende Erfindung betrifft ein Verfahren zum Fördern von Erdöl aus unterirdischen Formationen, wobei in einem Verfahrensschritt permeable Bereich der unterirdischen Formation durch Injizieren wässriger Formulierungen hydrophob assoziierender Copolymere in die Formation blockiert werden.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 µm aufweisen. Die unterirdische Formation kann darüber hinaus auch Bereiche mit Poren größeren Durchmessers und/oder natürliche Brüche aufweisen. Neben Erdöl, inklusive Anteilen von Erdgas enthält eine Lagerstätte in der Regel mehr oder weniger stark salzhaltiges Wasser.

Nach dem Niederbringen einer Bohrung in die ölführenden Schichten strömt Erdöl zunächst aufgrund des natürlichen Lagerstättendruckes zu den Förderbohrungen und gelangt eruptiv an die Erdoberfläche. Diese Phase der Erdölförderung wird vom Fachmann Primärförderung genannt. Die Eruptivförderung kommt aber in aller Regel sehr schnell zum Erliegen, insbesondere bei schlechten Lagerstättenbedingungen, wie beispielsweise einer hohen Ölviskosität, schnell abfallendem Lagerstättendruck oder großen Fließwiderständen in den ölführenden Schichten. Mit der Primärförderung können im Durchschnitt nur 2 bis 10 % des ursprünglich in der Lagerstätte vorhandenen Öles gefördert werden. Bei höher viskosen Erdölen ist eine eruptive Produktion in der Regel überhaupt nicht möglich.

Um die Erdölausbeute zu steigern, werden daher die so genannten sekundären sowie gegebenenfalls tertiären Förderverfahren eingesetzt.

Ein Verfahren der sekundären Erdölförderung ist das so genannte "Wasserfluten". Die Lagerstätte wird hierzu zusätzlich zu den Produktionsbohrungen, also den Bohrungen durch die der Erdölformation Erdöl entnommen wird, mit einer oder mehreren Injektionsbohrungen versehen. Durch die Injektionsbohrungen wird Wasser in die ölführenden Schichten eingepresst. Hierdurch wird der Lagerstättendruck künstlich erhöht und das Öl von den Injektionsbohrungen aus in Richtung der Förderbohrungen gedrückt. Durch Wasserfluten kann der Ausbeutungsgrad wesentlich gesteigert werden. Anstelle von Wasser kann auch Dampf in die Lagerstätte injiziert werden ("Dampffluten"). Dies empfiehlt sich insbesondere dann, wenn die Lagerstätte hochviskose Öle enthält.

Im Zuge des Wasserflutens soll im Idealfalle eine von der Injektionsbohrung aus gehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen, ölgesättigten Speichergesteinen mit einem hohen Fließwiderstand für Wasser existieren auch Bereiche mit niedrigem Fließwiderstand für Wasser, wie beispielsweise natürliche oder künstliche Brüche oder sehr permeable Bereiche im Speichergestein. Bei den permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung, während die feinporösen, ölgesättigten Lagerstättenbereiche mit hohem Fließwiderstand nicht mehr oder zumindest langsamer von Wasser durchströmt werden. Das Wasser strömt somit nicht mehr gleichmäßig durch die Formation, sondern die Wasserfront ist sehr unregelmäßig (das sogenannte "Fingering"), und über die Produktionsbohrung wird zunehmend mehr Wasser und weniger Erdöl gefördert. Der Fachmann spricht in diesem Zusammenhang von einer "Verwässerung der Produktion". Die genannten Effekte sind bei schweren bzw. viskosen Erdöle besonders ausgeprägt. Je höher die Erdölviskosität, desto wahrscheinlicher ist die schnelle Verwässerung der Produktion. Das Problem tritt insbesondere beim Vorliegen von zerklüfteten Gesteinsformationen (sogenannten "fractured reservoirs") auf.

Weiterhin existieren Erdölformationen, bei denen unter einer ölführenden Schicht eine wasserführende Schicht angeordnet ist. Beim Anbohren einer derartigen Formation werden nicht nur Erdöl, sondern auch Wasser gefördert, so dass auch hier die Produktion signifikant verwässert ist.

Es hat nicht an Versuchen gefehlt, das ungleichmäßige Strömen von Wasser zu verhindern, oder zumindest ein gleichmäßigeres Strömen zu erreichen. Im Stand der Technik sind daher Maßnahmen bekannt, derartige hoch permeable Zonen zwischen den Injektionsbohrungen und Produktionsbohrungen mittels geeigneter Maßnahmen zu schließen oder zumindest deren Permeabilität zu verringern. Hierdurch werden das Flutwasser bzw. der Flutdampf gezwungen, wieder die ölgesättigten, niedrig permeablen Schichten zu durchströmen, und somit kann wieder weiteres Erdöl mobilisiert werden. Derartige Maßnahmen sind auch als "Conformance Control" oder "Water Shut-Off" bekannt. Einen Überblick über Maßnahmen zur "Conformance Control" geben Borling et al. "Pushing out the oil with Conformance Control" in Oilfield Review (1994), Seiten 44 ff.*.*

Zum Blockieren hochpermeabler Bereiche unterirdischer Formationen bzw. zur "Conformance Control" können vergleichsweise niedrig viskose Formulierungen bestimmter chemischer Stoffe eingesetzt werden, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische, organische oder polymere Komponenten. Die Viskositätssteigerung der eingepressten Formulierung kann beispielsweise einfach zeitverzögert auftreten und/oder die Viskositätssteigerung kann durch den Temperaturanstieg ausgelöst werden, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt.

SU 1 654 554 A1 offenbart ein Verfahren zum Fördern von Öl unter Verwendung von Mischungen aus Aluminiumchlorid oder Aluminiumnitrat, Harnstoff und Wasser, welche in die Erdölformation injiziert werden. Die Formulierungen strömen dort naturgemäß vorzugsweise entlang der Fließwege mit geringstem Fließwiderstand. Bei den erhöhten Temperaturen in der Formation hydrolysiert der Harnstoff zu Kohlendioxid und Ammoniak. Durch die Freisetzung der Base Ammoniak wird der pH-Wert des Wassers deutlich erhöht und es fällt ein hochviskoses Gel aus Aluminiumhydroxid aus, welches die hoch permeablen Zonen verstopft.

US 2008/0035344 A1 offenbart eine Mischung zum Blockieren unterirdischer Formationen mit verzögerter Gelierung, welche mindestens ein säurelösliches, vernetzbares Polymer, beispielsweise teilweise hydrolysiertes Polyacrylamid, ein teilweise neutralisiertes Aluminiumsalz, beispielsweise ein Aluminiumhydroxidchlorid sowie einen Aktivator umfasst, welcher unter Formationsbedingungen Basen freisetzen kann, wie beispielsweise Harnstoff, substituierte Harnstoffe oder Hexamethylentetramin. Die Mischung kann bevorzugt bei einer Temperatur von 0 bis 40°C eingesetzt werden und geliert bei Temperaturen oberhalb 50°C je nach Einsatzbedingungen innerhalb von 2 h bis 10 Tagen.

RU 2 361 074 offenbart ein Verfahren zum Blockieren hoch permeabler Zonen, bei dem Portionen von Formulierungen auf Basis von Harnstoff und Aluminiumsalzen in eine Lagerstätte mit hoher Lagerstättentemperatur verpresst werden.

US 4,182,417, US 2007/0204989, WO 2007/126318 A1 und WO 2010/069607 A1 offenbaren in Wasser quellbare Partikel zum Blockieren unterirdischer Formationen. Diese Partikel können in einer geeigneten Formulierung in die unterirdische Formation injiziert werden, quellen in der Formation unter dem Einfluss des Formationswassers auf und Blockieren auf diese Art und Weise hoch permeable Bereiche der Formation.

R.D. Sydansk "Acrylamide-Polymer/Chromium(III)-Caroxylate Gels for Near Wellbore Matrix Treatments" in Proceedings Society of Petroleum Engineers / US Department of Energy, 7th Symposium on Enhanced Oil Recovery, April 22- 25, 1990, Tulsa, Oklahoma, SPE/DOE 20214, Society of Petroleum Engineers, 1990 offenbaren Acrylamid-Chrom(III)carboxylat-Gele zum Blockieren unterirdischer Formationen. Hierzu werden Acrylamid sowie Cr(III)-Carboxylate, beispielsweise Cr(III)-Acetat in die Formation injiziert. Unter den Formationsbedinungen hydrolysieren Amid-Gruppen des Polymers zu Carboxylat-Gruppen. Das Cr(III)-Carboxylat vernetzt dann Carboxylat-Gruppen verschiedener Polymerstränge, und somit wird ein viskoses Gel gebildet.

US 4,613,631 offenbart Gele aus vernetzten Polymeren zum Blockieren unterirdischer Formationen. Bei den Polymeren kann es sich beispielsweise um Polyacrylamid, Polyacrylsäuren oder auch Biopolymere wie beispielsweise Xanthogenate. Als Vernetzer werden organische Verbindungen, welche mindestens zwei positiv geladene Stickstoffatome aufweisen, eingesetzt.

US 7,150,319 B2 offenbart ein Verfahren zum Blockieren unterirdischer Formationen, bei denen ein Copolymer, welches 2-Acrylamido-2-methylpropansulfonsäure, Acrylamid, ein weiteres stickstoffhaltiges Monomer wie beispielsweise N-Vinylformamid oder N-Vinylpyrrolidon sowie Vinylphosphonsäure als Monomere umfasst. Das Copolymer wird mit Chrom-, Zirkonium-, Titan- oder Aluminiumverbindungen unter Bildung eines viskosen Gels vernetzt.

US 6,803,348 B2 offenbart ein Verfahren zum Vermindern der Wasserproduktion aus erdölführenden, unterirdischen Formationen, bei dem man wasserlösliche, hydrophob assoziierende Copolymere einsetzt, welche eine lineare, hydrophile Hauptkette, hydrophobe Seitengruppen und funktionelle Gruppen, welche zum Vernetzen genützt werden können, umfassen. Die wasserlöslichen Copolymere werden in die unterirdische Formation injiziert und dort vernetzt, beispielsweise mittels Cr(III)-Ionen, Zr(IV)-Ionen oder Aldehyden. Bevorzugt handelt es sich um Polymere auf Basis von Polyacrylamiden. Bei den hydrophoben Gruppen handelt es sich bevorzugt um Alkylgruppen mit mindestens 6, bevorzugt mindestens 8 und besonders bevorzugt mindestens 12 Kohlenstoffatomen. Das Copolymer kann beispielsweise N-Alkylacrylamide, wie beispielweise N-Decylacrylamid als Monomer umfassen.

WO 2010/133527 A2 offenbart hydrophob assoziierende Copolymere, welche mindestens hydrophile, monoethylenisch ungesättigte Monomere wie beispielsweise Acrylamid sowie monoethylenisch ungesättigte hydrophob assoziierende Monomere umfassen. Die hydrophob assoziierenden Monomere haben eine Blockstruktur und weisen -in dieser Reihenfolge- eine ethylenisch ungesättigte Gruppe, optional eine verknüpfende Gruppe, einen ersten Polyoxyalkylenblock, welcher zu mindestens 50 mol % Ethylenoxygruppen umfasst sowie einen zweiten Polyoxyalkylenblock, welcher aus Alkylenoxygruppen mit mindestens 4 Kohlenstoffatomen besteht auf. Die Anmeldung offenbart die Verwendung derartiger Copolymere als Verdicker, beispielsweise zum Polymerfluten, für bauchemische Anwendungen oder für Waschmittelformulierungen.

WO 2011/015520 A1 offenbart ein Verfahren zum Herstellen hydrophob assoziierender Copolymere durch Polymerisation wasserlöslicher, monoethylenisch ungesättigter oberflächenaktiver Monomere sowie monoethylenisch ungesättigten hydrophilen Monomeren in Gegenwart von Tensiden und die Verwendung derartiger Copolymere zum Polymerfluten.

Unsere älteren Anmeldungen EP 10192323.3, EP 10192334.0 sowie EP 10192316.7 offenbaren die Verwendung der in WO 2010/133527 A2 offenbarten, hydrophob assoziierenden Copolymere in speziellen Verfahren zum Polymerfluten.

Keine der zuletzt zitierten Anmeldungen offenbart aber die Verwendung derartiger hydrophob assoziierender Copolymere zum Blockieren unterirdischer, erdölführender Formationen.

Aufgabe der Erfindung war es, ein verbessertes Verfahren zum Blockieren hochpermeabler Bereiche erdölführender Formationen bereitzustellen.

Dementsprechend wurde ein Verfahren zur Förderung von Erdöl aus unterirdischen Erdöllagerstätten gefunden, welches mindestens die folgenden Verfahrenschritte umfasst:
(1) Blockieren permeabler Bereiche der unterirdischen Erdöllagerstätte durch Injizieren einer wässrigen Formulierung in die Formation durch mindestens eine Bohrung, wobei die wässrige Formulierung mindestens ein wasserlösliches, hydrophob assoziierendes Copolymer umfasst, sowie
(2) Injizieren eines wässrigen Flutmediums in mindestens eine Injektionsbohrung und Entnahme von Erdöl durch die mindestens eine Produktionsbohrung,
   und wobei
   - das wasserlösliche, hydrophob assoziierende Copolymer
      (a) 0,1 bis 15 Gew.-% mindestens eines monoethylenisch ungesättigten, hydrophob assoziierenden Monomers (a) ausgewählt aus der Gruppe von

         H₂C=C(R¹)-R²-O-(-CH₂-CH(R³)-O-)ₖ-(-CH₂-CH(R⁴)-O-)ₗ-R⁵ (I),

         H₂C=C(R¹)-O-(-CH₂-CH(R³)-O-)ₖ-R⁶ (II),

         H₂C=C(R¹)-(C=O)-O-(-CH₂-CH(R³)-O-)ₖ-R⁶ (III),

         umfasst, wobei die Einheiten -(-CH₂-CH(R³)-O-)ₖ und -(-CH₂-CH(R⁴)-O-)ₗ in Blockstruktur in der in Formel (I) dargestellten Reihenfolge angeordnet sind und die Reste und Indices die folgende Bedeutung haben:
         - k:: eine Zahl von 10 bis 150,
         - I:: eine Zahl von 5 bis 25,
         - R¹:: H oder Methyl,
         - R²:: eine Einfachbindung oder eine zweiwertige, verknüpfende Gruppe, ausgewählt aus der Gruppe von -(CₙH₂ₙ)-[R^{2a}], -O-(C_{n'}H_{2n'})-[R^{2b}] und - C(O)-O-(C_{n"}H_{2n"})-[R^{2c}], wobei n, n' und n" jeweils für eine natürliche Zahl von 1 bis 6 stehen,
         - R³:: unabhängig voneinander H, Methyl oder Ethyl, mit der Maßgabe, dass es sich bei mindestens 50 mol % der Reste R³ um H handelt,
         - R⁴:: unabhängig voneinander ein Kohlenwasserstoffrest mit mindestens 2 Kohlenstoffatomen oder eine Ethergruppe der allgemeinen Formel -CH₂-O-R^{4'}, wobei R^{4'} für einen Kohlenwasserstoffrest mit mindestens 2 Kohlenstoffatomen steht,
         - R⁵:: H oder ein Kohlenwasserstoffrest mit 1 bis 30 C-Atomen,
         - R⁶:: ein aliphatischer und/oder aromatischer, geradkettiger oder verzweigter Kohlenwasserstoffrest mit 8 bis 40 Kohlenstoffatomen,
         sowie weiterhin
      (b) 85 bis 99,9 Gew. % mindestens zweier, davon verschiedener, monoethylenisch ungesättigterMonomere (b) umfasst, wobei es sich bei den Monomeren (b) um
         (b1) mindestens ein neutrales, monoethylenisch ungesättigtes, hydrophiles Monomer (b1), ausgewählt aus der Gruppe von (Meth)acrylamid, N-Methyl(meth)acrylamid, N,N'-Dimethyl(meth)acrylamid oder N-Methylol(meth)acrylamid, sowie um
         (b2) mindestens ein Monomer (b2a) und/oder (b2b), wobei die Monomere (b2a) und (b2b) wie folgt definiert sind:
            (b2a) anionische, monoethylenisch ungesättigte, hydrophile Monomere, welches mindestens eine saure Gruppe ausgewählt aus der Gruppe von -COOH, -SO₃H oder -PO₃H₂ aufweisen, bzw. deren Salze,
            (b2b) (Meth)acrylsäureester der allgemeinen Formel H₂C=C(R¹⁵)-COOR¹⁶, wobei R¹⁵ für H oder Methyl und R¹⁶ für einen geradkettigen oder verzweigten Alkylrest mit 1 bis 8 C-Atomen stehen, mit der Maßgabe, dass die Menge der Monomere (b2b) -sofern vorhanden- 20 Gew. % nicht überschreitet,
      wobei die Mengenangaben jeweils auf die Gesamtmenge aller Monomere im Copolymer bezogen sind,
   - das Copolymer ein gewichtsmittleres Molekulargewicht M_{w} von 0,5*10⁶ g/mol bis 30*10⁶ g/mol aufweist,
   - die Menge des Copolymers in der wässrigen Formulierung 0,1 bis 3 Gew. % beträgt, und
   - die Lagerstättentemperatur 20°C bis 120°C beträgt.

Zur Erfindung ist im Einzelnen das Folgende auszuführen:

Das erfindungsgemäße Verfahren umfasst mindestens zwei Verfahrensschritte (1) und (2).

In Verfahrensschritt (1) werden permeable Bereiche der unterirdischen Erdöllagerstätte blockiert, indem man eine wässrige Formulierung durch mindestens eine in die Formation niedergebrachte Bohrung injiziert, wobei die wässrige Formulierung mindestens ein wasserlösliches, hydrophob assoziierendes Copolymer umfasst. Der Begriff "Blockieren" bedeutet hierbei, dass die permeablen Bereiche ganz oder zumindest teilweise verschlossen werden. "Teilweise verschlossen" soll bedeuten, dass sich der Fließwiderstand der permeablen Bereiche für wässrige Medien aufgrund der Behandlung mit der wässrigen Formulierung des Copolymers erhöht. Dies kann beispielsweise dadurch geschehen, dass das Copolymer in den permeablen Bereichen der Formation ein Gel bildet und diese verstopft, oder es kann dadurch geschehen, dass das Copolymer eine Beschichtung auf der inneren Oberfläche von Hohlräumen in der Formation bildet und durch diese Verengung der Fließwege den Strömungswiderstand in den permeablen Bereichen erhöht.

In Verfahrensschritt (2) erfolgt die eigentliche Erdölförderung durch Injizieren eines wässrigen Flutmediums in mindestens eine Injektionsbohrung und Entnahme von Erdöl durch mindestens eine Produktionsbohrung. Das injizierte wässrige Flutmedium hält den Druck aufrecht und drückt das Erdöl von den Injektionsbohrungen aus in Richtung der Produktionsbohrungen.

Die Durchführung von Verfahrensschritt (1), d.h. das Blockieren permeabler Zonen, hat hierbei zur Folge, dass in Verfahrensschritt (2) das injizierte Flutmedium gezwungen wird, auch weniger permeable, noch nicht entölte Bereiche der unterirdischen Formation zu durchströmen. Hierdurch wird die Erdölausbeute erhöht und die Wasserproduktion vermindert.

Die Verfahrensschritte (1) und (2) können im Rahmen des erfindungsgemäßen Verfahrens auch mehrfach durchgeführt werden, und das erfindungsgemäße Verfahren kann selbstverständlich noch weitere Verfahrensschritte umfassen.

### Lagerstätten

Bei den Erdölagerstätten, auf die das erfindungsgemäße Verfahren angewandt wird, kann es sich um Lagerstätten für alle Sorten von Öl handeln, beispielsweise um solche für leichtes oder für schweres Öl.

Neben Erdöl sowie gegebenenfalls Erdgas enthalten die Lagerstätten in aller Regel mehr oder weniger stark salzhaltiges Lagerstättenwasser. Typische Salze in Lagerstättenwässern umfassen insbesondere Alkalimetallsalze und Erdalkalimetallsalze. Beispiele typischer Kationen umfassen Na⁺, K⁺, Mg²⁺ oder Ca²⁺ und Beispiele typischer Anionen umfassen Chlorid, Bromid, Hydrogencarbonat, Sulfat oder Borat. Das erfindungsgemäße Verfahren eignet sich insbesondere für Lagerstätten mit einer Gesamtmenge aller Salze im Lagerstättenwasser von 20 000 ppm bis 350 000 ppm (Gewichtsanteile), bevorzugt 100000 ppm bis 250 000 ppm. Die Menge an Erdalkalimetallionen im Lagerstättenwasser kann insbesondere 1000 bis 53 000 ppm betragen.

Die Erdöllagerstätten weisen eine inhomogene Permeabilität auf. Hierunter ist zu verstehen, dass die Permeabilität nicht in allen Bereichen der Lagerstätte gleich ist, sondern dass die Lagerstätte Bereiche höherer und niedrigerer Permeabilität aufweist. Bereiche höherer Permeabilität können beispielsweise dadurch bedingt sein, dass die Lagerstätten in diesem Bereich größere Poren aufweisen, oder aber dass die Lagerstätten Brüche, Risse, Spalten oder dergleichen aufweisen. Beim fortgesetzten Injizieren von Wasser in die Formation zur Aufrechterhaltung des Drucks, dem sogenannten Wasserfluten, fließt das injizierte Wasser aufgrund des geringen Strömungswiderstands bevorzugt durch die Bereiche hoher Permeabilität.

Die Lagerstätte kann auch verschiedene, übereinander angeordnete Gesteinsschichten unterschiedlicher Permeabilität aufweisen. Beispielsweise kann eine Lagerstätte eine vergleichsweise permeable, im Wesentlichen Wasser enthaltende Schicht umfassen sowie eine darüber liegende, weniger permeable, Erdöl umfassende Schicht.

Die Lagerstättentemperaturen (T_{L}) liegen im Bereich von 20°C bis 120°C, insbesondere 30°C bis 120°C, bevorzugt 35°C bis 110°C, besonders bevorzugt 40°C bis 100°C, ganz besonders bevorzugt 45°C bis 90°C und beispielsweise 50°C bis 75°C. Für den Fachmann ist klar, dass eine Erdöllagerstätte auch eine gewisse Temperaturverteilung aufweisen kann. Die genannte Lagerstättentemperatur bezieht sich auf den Bereich der Lagerstätte zwischen den Injektions-und Produktionsbohrungen, also den Bereich, der von den Verfahrensschritten (1) und (2) erfasst wird. Die Temperaturverteilung kann in der Regel aus Temperaturmessungen an bestimmten Stellen der Formation in Kombination mit Simulationsrechnungen vorgenommen, wobei man bei den Simulationsrechnungen u.a. in die Formation eingebrachte Wärmemengen sowie die aus der Formation abgeführte Wärmemengen berücksichtigt.

Zur Ausführung von Verfahrensschritt (1) des erfindungsgemäßen Verfahrens wird in die Erdöllagerstätte mindestens eine Bohrung niedergebracht, durch welche die wässrige Copolymerformulierung zum Blockieren permeabler Bereiche injiziert werden kann. Es kann sich dabei um eine Bohrung handeln, welche eigens für Verfahrensschritt (1) niedergebracht wurde. Bevorzugt handelt es sich um eine Injektions- und/oder eine Produktionsbohrung, welche auch für Verfahrensschritt (2) verwendet werden können und/oder bereits in einem vorangegangenen Wasserfluten verwendet wurden.

Zur Ausführung von Verfahrensschritt (2) werden in die Erdöllagerstätte mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen. Durch die mindestens eine Injektionsbohrung können wässrige Formulierungen in die Erdöllagerstätte injiziert werden, und die Produktionsbohrungen dienen dazu, der Erdöllagerstätte Erdöl zu entnehmen. Mit dem Begriff "Erdöl" ist in diesem Zusammenhang selbstverständlich nicht nur phasenreines Öl gemeint, sondern der Begriff umfasst auch die üblichen Rohöl-Wasser-Emulsionen, wobei es sich bei dem Wasser sowohl um Lagerstättenwasser handeln kann oder auch um injiziertes Wasser, welches bis zur Produktionsbohrung vorgedrungen ist.

Bei den Bohrungen, welche für Verfahrensschritt (1) genutzt kann es sich bevorzugt um die Injektions- und/oder Produktionsbohrungen handeln, welche auch für Verfahrensschritt (2) genutzt werden.

### Verfahrensschritt (1)

In Verfahrensschritt (1) wird eine wässrige Formulierung eingesetzt, welche mindestens ein wasserlösliches, hydrophob assoziierendes Copolymer umfasst. Neben dem mindestens einen Copolymer kann die Formulierung optional noch weitere Komponenten umfassen.

### Eingesetzte, hydrophob assoziierende Copolymere

Der Begriff "hydrophob assoziierende Copolymere" ist dem Fachmann prinzipiell bekannt.
Es handelt es sich hierbei um wasserlösliche Copolymere, welche neben hydrophilen Molekülteilen hydrophobe Gruppen aufweisen. In wässriger Lösung können die hydrophoben Gruppen mit sich selbst oder mit anderen, hydrophobe Gruppen aufweisenden Stoffen aufgrund zwischenmolekularer Kräfte assoziieren. Hierdurch entsteht ein durch zwischenmolekulare Kräfte geknüpftes polymeres Netzwerk, welches das wässrige Medium verdickt.

Im Idealfalle sollten die erfindungsgemäß verwendeten Copolymere in beliebigem Verhältnis mit Wasser mischbar sein. Erfindungsgemäß ist es aber ausreichend, wenn die Copolymere zumindest bei der gewünschten Einsatzkonzentration und beim gewünschten pH wasserlöslich sind. Im Regelfalle sollte die Löslichkeit in Wasser bei Raumtemperatur bei den Einsatzbedingungen mindestens 35 g/l betragen.

Erfindungsgemäß umfasst das verwendete, wasserlösliche, hydrophob assoziierende Copolymer 0,1 bis 15 Gew.-% mindestens eines monoethylenisch ungesättigten, hydrophob assoziierenden Monomers (a) sowie 85 bis 99,9 Gew. % mindestens zweier, davon verschiedener, monoethylenisch ungesättigter, hydrophiler Monomere (b). Darüber hinaus können optional weitere von den Monomeren (a) und (b) verschiedene, ethylenisch ungesättigte, bevorzugt monoethylenisch ungesättigte Monomere (c) in einer Menge von bis zu 14,9 Gew. % vorhanden sein. Die genannten Mengenangaben beziehen sich jeweils auf die Summe aller Monomere im Copolymer. Bevorzugt werden ausschließlich monoethylenisch ungesättigte Monomere eingesetzt.

### Monomere (a)

Das eingesetzte wasserlösliche, hydrophob assoziierende Copolymer umfasst mindestens ein monoethylenisch ungesättigtes Monomer (a), welches dem Copolymer hydrophob assoziierende Eigenschaften verleiht und daher im Folgenden als "hydrophob assoziierendes Monomer" bezeichnet werden soll. Erfindungsgemäß werden die Monomere (a) ausgewählt aus der Gruppe von

H₂C=C(R¹)-R²-O-(-CH₂-CH(R³)-O-)ₖ-(-CH₂-CH(R⁴)-O-)ₗ-R⁵ (I),

H₂C=C(R¹)-O-(-CH₂-CH(R³)-O-)ₖ-R⁶ (II),

H₂C=C(R¹)-(C=O)-O-(-CH₂-CH(R³)-O-)ₖ-R⁶ (III).

### Monomere (a) der Formel (I)

Bei den Monomeren (a) der Formel (I) ist eine ethylenische Gruppe H₂C=C(R¹)- über eine zweiwertige, verknüpfende Gruppe -R²-O- mit einem Polyoxyalkylenrest mit Blockstruktur -(-CH₂-CH(R³)-O-)ₖ-(-CH₂-CH(R⁴)-O-)ₗ-R⁵ verbunden, wobei die beiden Blöcke -(-CH₂-CH(R³)-O-)ₖ und -(-CH₂-CH(R⁴)-O-)ₗ in der in Formel (I) dargestellten Reihenfolge angeordnet sind. Der Polyoxyalkylenrest weist entweder eine terminale OH-Gruppe oder eine terminale Ethergruppe-OR⁵ auf.

In der oben genannten Formel steht R¹ für H oder eine Methylgruppe.

R² steht für eine Einfachbindung oder eine zweiwertige, verknüpfende Gruppe, ausgewählt aus der Gruppe von -(CₙH₂ₙ)- [Gruppe R^{2a}], -O-(C_{n'}H_{2n'})- [Gruppe R^{2b}]- und -C(O)-O-(C_{n"}H_{2n"})-[Gruppe R^{2c}]. In den genannten Formeln stehen n, n' und n" jeweils für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -0- oder über eine Esterguppe -C(O)-O- mit der ethylenischen Gruppe H₂C=C(R¹)- verknüpft sind. Bevorzugt handelt es sich bei den Gruppen -(CₙH₂ₙ)-, -(C_{n'}H_{2n'})- und -(C_{n"}H_{2n"})- um lineare aliphatische Kohlenwasserstoffgruppen.

Bevorzugt handelt es sich bei der Gruppe R^{2a} um eine Gruppe ausgewählt aus -CH₂-,-CH₂-CH₂- und -CH₂-CH₂-CH₂-, besonders bevorzugt ist eine Methylengruppe -CH₂-.

Bevorzugt handelt es sich bei der Gruppe R^{2b} um eine Gruppe ausgewählt aus -O-CH₂-CH₂-, - O-CH₂-CH₂-CH₂- und -O-CH₂-CH₂-CH₂-CH₂-, besonders bevorzugt ist -O-CH₂-CH₂-CH₂-CH₂-. Bevorzugt handelt es sich bei der Gruppe R^{2c} um eine Gruppe ausgewählt aus -C(O)-O-CH₂-CH₂-, -C(O)O-CH(CH₃)-CH₂-, -C(O)O-CH₂-CH(CH₃)-, -C(O)O-CH₂-CH₂-CH₂-CH₂- und - C(O)O-CH₂-CH₂-CH₂-CH₂-CH₂-CH₂-, besonders bevorzugt sind -C(O)-O-CH₂-CH₂- und - C(O)O-CH₂-CH₂-CH₂-CH₂- und ganz besonders bevorzugt ist -C(O)-O-CH₂-CH₂-.

Besonders bevorzugt handelt es sich bei der Gruppe R² um eine Gruppe R^{2a} oder R^{2b}, besonders bevorzugt um eine Gruppe R^{2b}.

Weiterhin besonders bevorzugt handelt es sich bei R² um eine Gruppe ausgewählt aus -CH₂-oder -O-CH₂-CH₂-CH₂-CH₂-, ganz besonders bevorzugt ist -O-CH₂-CH₂-CH₂-CH₂-.

Die Monomere (I) weisen weiterhin einen Polyoxyalkylenrest auf, der aus den Einheiten -(-CH₂-CH(R³)-O-)ₖ und -(-CH₂-CH(R⁴)-O-)ₗ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Im Block -(-CH₂-CH(R³)-O-)ₖ stehen die Reste R³ unabhängig voneinander für H, Methyl oder Ethyl, bevorzugt H oder Methyl mit der Maßgabe, dass es sich bei mindestens 50 mol % der Reste R³ um H handelt. Bevorzugt handelt es sich bei mindestens 75 mol % der Reste R³ um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

Bei der Anzahl der Alkylenoxideinheiten k handelt es sich um eine Zahl von 10 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R⁴)-O-)ₗ- stehen die Reste R⁴ unabhängig voneinander für Kohlenwasserstoffstoffreste von mindestens 2 Kohlenstoffatomen, bevorzugt mindestens 3, besonders bevorzugt 3 bis 10 und ganz besonders bevorzugt 3 bis 4 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste R⁴ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei den Resten R⁴ kann es sich weiterhin um Ethergruppen der allgemeinen Formel -CH₂-O-R^{4'} handeln, wobei es sich bei R^{4'} um einen aliphatischen und/oder aromatischen, linearen oder verzweigten Kohlenwasserstoffrest mit mindestens 2 Kohlenstoffatomen, bevorzugt mindestens 3 und besonders bevorzugt 3 bis 10 Kohlenstoffatomen handelt. Beispiele für Reste R^{3'} umfassen n-Propyl, n-Butyl, n-Pentyl, n-Hexyl, 2-Ethylhexyl, n-Heptyl, n-Octyl, n-Nonyl n-Decyl oder Phenyl.

Bei dem Block -(-CH₂-CH(R⁴)-O-)ₗ- handelt es sich also um einen Block, der aus Alkylenoxideinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bevorzugt als Reste R³ sind die genannten Kohlenwasserstoffeste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei dem Rest R⁵ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei R⁵ um H, Methyl oder Ethyl, besonders bevorzugt um H oder Methyl und ganz besonders bevorzugt um H.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale -OR⁵-Gruppe, insbesondere eine OH-Gruppe auf. Der terminale Block -(-CH₂-CH(R⁴)-O-)ₗ mit den Resten R⁴ ist für das hydrophobe Assoziieren der unter Verwendung der Monomere (a) hergestellten Copolymere verantwortlich. Verethern der OH-Endgruppe ist eine Option, welche vom Fachmann je nach den gewünschten Eigenschaften des Copolymers gewählt werden kann. Eine terminale Kohlenwasserstoffgruppe ist für das hydrophobe Assoziieren aber nicht erforderlich, sondern das hydrophobe Assoziieren funktioniert auch bei einer terminalen OH-Gruppe.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block-(-CH₂-CH(R³)-O-)ₖ noch geringe Mengen an Einheiten -CH₂-CH(R⁴)-O- und der zweite Block -(-CH₂-CH(R⁴)-O-)ₗ-geringe Mengen an Einheiten -CH₂-CH(R³)-O- aufweisen, wobei diese Einheiten aber nicht statistisch über den Block verteilt sind, sondern in der genannten Übergangszone angeordnet sind.

### Herstellung der Monomere (a) der Formel (I)

Die Herstellung der hydrophob assoziierenden Monomere (a) der Formel (I) kann nach dem Fachmann prinzipiell bekannten Methoden erfolgen.

Zur Herstellung der Monomere (a) geht man in einem bevorzugten Herstellverfahren von geeigneten monoethylenisch ungesättigten Alkoholen (IV) aus, welche anschließend in einem zweistufigen Prozess alkoxyliert werden, so dass die erwähnte Blockstruktur erhalten wird. Man erhält Monomere (a) der Formel (I) mit R⁵ = H. Diese können optional in einem weiteren Verfahrensschritt verethert werden.

Die Art der zu verwendenden ethylenisch ungesättigten Alkohole (IV) richtet sich hierbei insbesondere nach der Gruppe R².

Sofern R² für eine Einfachbindung steht, geht man von Alkoholen (IV) der allgemeinen Formel H₂C=C(R¹)-O-(-CH₂-CH(R⁷)-O-)_{d}-H (IVa), wobei R¹ die oben definierte Bedeutung hat, R⁷ für H und/oder CH₃, bevorzugt H und d für eine Zahl von 1 bis 5, bevorzugt 1 oder 2 steht. Beispiele derartiger Alkohole umfassen Diethylenglykolvinylether H₂C=CH-O-CH₂-CH₂-O-CH₂-CH₂-OH oder Dipropylenglykolvinylether H₂C=CH-O-CH₂-CH(CH₃)-O-CH₂-CH(CH₃)-OH, bevorzugt ist Diethylenglykolvinylether.

Zur Herstellung von Monomeren (a) bei denen R² nicht für eine Einfachbindung steht, können Alkohole der allgemeinen Formel H₂C=C(R¹)-R²-OH (IVb) oder bereits Alkoxygruppen aufweisende Alkoholen der Formel H₂C=C(R¹)-R²-O-(-CH₂-CH(R⁷)-O-)_{d}-H (IVc) eingesetzt werden, wobei R⁷ und d die oben definierte Bedeutung haben, und R² jeweils aus der Gruppe von R^{2a}, R^{2b} und R^{2c} gewählt wird.

Zur Herstellung der Monomere mit verknüpfender Gruppe R^{2a} geht bevorzugt man von Alkoholen der Formel H₂C=C(R¹)-(CₙH₂ₙ)-OH, insbesondere H₂C=CH-(CₙH₂ₙ)-OH oder Alkoholen der Formel H₂C=C(R¹)-O-(-CH₂-CH(R⁷)-O-)_{d}-H aus. Beispiele bevorzugter Alkohole umfassen Allylalkohol H₂C=CH-CH₂-OH oder Isoprenol H₂C=C(CH₃)-CH₂-CH₂-OH.

Zur Herstellung der Monomere mit verknüpfender Gruppe R^{2b} geht man von Vinylethern der Formel H₂C=C(R¹)-O-(C_{n'}H_{2n'})-OH, bevorzugt H₂C=CH-O-(C_{n'}H_{2n'})-OH aus. Besonders bevorzugt kann ω-Hydroxybutylvinylether H₂C=CH-O-CH₂-CH₂-CH₂-CH₂-OH eingesetzt werden.

Zur Herstellung der Monomere mit verknüpfender Gruppe R^{2c} geht man von Hydroxyalkyl(meth)acrylaten der allgemeinen Formel H₂C=C(R¹)-C(O)-O-(C_{n"}H_{2n"})-OH, bevorzugt H₂C=C(R¹)-C(O)-O-(C_{n"}H_{2n"})-OH aus. Beispiele bevorzugter Hydroxyalkyl(meth)acrylate umfassen Hydroxyethyl(meth)acrylat H₂C=C(R¹)-C(O)-O-CH₂-CH₂-OH sowie Hydroxybutyl(meth)acrylat H₂C=C(R¹)-C(O)-O-CH₂-CH₂-CH₂-CH₂-OH.

Die genannten Ausgangsverbindungen werden alkoxyliert, und zwar in einem zweistufigen Prozess zunächst mit Ethylenoxid, optional im Gemisch mit Proyplenoxid und/oder Butylenoxid und in einem zweiten Schritt mit Alkylenoxiden der allgemeinen Formeln (Xa) bzw. (Xb) 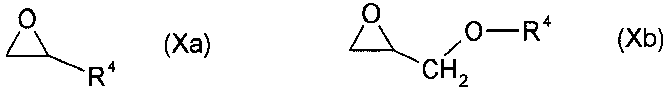 wobei R⁴ in (Xa) bzw. R^{4'} in (Xb) die eingangs definierte Bedeutung haben.

Die Durchführung einer Alkoxylierung einschließlich der Herstellung von Blockcopolymeren aus verschiedenen Alkylenoxiden ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate sowie die Orientierung von Alkylenoxideinheiten in einer Polyetherkette beeinflussen kann.

Die Alkoxylate können beispielsweise durch basenkatalysierte Alkoxylierung hergestellt werden. Dazu kann der als Ausgangsmaterial verwendete Alkohol in einem Druckreaktor mit Alkalihydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und ein einem ersten Schritt Ethylenoxid, optional im Gemisch mit Propylen- und/oder Butylenoxid bei Temperaturen von 60 bis 180°C, bevorzugt 130 bis 150°C schrittweise zugegeben. Die Zugabe erfolgt typischerweise innerhalb von 2 bis 5 h, ohne dass die Erfindung darauf beschränkt sein soll. Nach Beendigung der Zugabe lässt man das Reaktionsgemisch zweckmäßigerweise nachreagieren, beispielsweise für ½ h bis 1 h. In einem zweiten Schritt dosiert man anschließend Alkylenoxide der allgemeinen Formel (Xb) schrittweise zu. Die Reaktionstemperatur in der zweiten Stufe kann beibehalten werden oder auch verändert werden. Bewährt hat sich eine um ca. 10 bis 25°C niedrigere Reaktionstemperatur als in der ersten Stufe.

Die Alkoxylierung kann auch mittels Techniken vorgenommen werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der als Ausgangsmaterial verwendete Alkohol mit dem Katalysator versetzt werden, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Alkoxylierung kann weiterhin auch säurekatalysiert vorgenommen werden. Bei den Säuren kann es sich um Brönstedt- oder Lewissäuren handeln. Zur Durchführung der Reaktion kann der als Ausgangsmaterial verwendete Alkohol mit dem Katalysator versetzt, die Mischung wie oben beschrieben entwässert werden und mit den Alkylenoxiden wie beschrieben umgesetzt werden. Am Ende der Reaktion kann der saure Katalysator durch Zugabe einer Base, beispielsweise KOH oder NaOH neutralisiert und bei Bedarf abfiltriert werden.

Für den Fachmann auf dem Gebiet der Polyalkylenoxide ist klar, dass die Orientierung der Kohlenwasserstoffeste R⁴ sowie gegebenenfalls R³ von den Bedingungen der Alkoxylierung abhängen kann, beispielsweise vom zur Alkoxylierung gewählten Katalysator. Die Alkylenoxidgruppen können also sowohl in der Orientierung -(-CH₂-CH(R⁴)-O-) oder auch in inverser Orientierung -(-CH(R⁴)-CH₂-O-)- in das Monomer eingebaut werden. Die Darstellung in Formel (I) soll daher nicht als auf eine bestimmte Orientierung der Gruppen R³ bzw. R⁴ beschränkt angesehen werden.

Sofern die terminale OH-Gruppe der Monomere (a) der Formel (I) (d.h. R⁵ = H) verethert werden sollen, kann dies mit dem Fachmann prinzipiell bekannten, üblichen Alkylierungsmitteln erfolgen, beispielsweise Alkylsulfaten. Zur Veretherung kann insbesondere Dimethylsulfat oder Diethylsulfat eingesetzt werden.

Das beschriebene bevorzugte Herstellverfahren für die Monomere (I) hat den Vorteil, dass die Bildung möglicherweise vernetzend wirkender Nebenprodukte weitgehend vermieden wird. Dementsprechend lassen sich Copolymere mit besonders niedrigem Gelanteil erhalten.

### Monomere (a) der Formeln (II) und (III)

Bei den Monomeren der Formeln (II) und (III) haben R¹, R³ und k die bereits geschilderte Bedeutung.

R⁶ steht für einen aliphatischen und/oder aromatischen, geradkettigen oder verzweigten Kohlenwasserstoffrest mit 8 bis 40 Kohlenstoffatomen, bevorzugt 12 bis 32 C-Atomen. Beispielsweise kann es sich um n-Alkylgruppen wie n-Octyl-, n-Decyl- oder n-Dodecylgruppen, Phenylgruppen sowie insbesondere substituierte Phenylgruppen handeln. Bei Substituenten an den Phenylgruppen kann es sich um Alkylgruppen, beispielsweise C₁- bis C₆-Alkylgruppen handeln, bevorzugt um Styrylgruppen. Besonders bevorzugt ist eine Tristyrylphenylgruppe.

Die hydrophob assoziierenden Monomere der Formeln (II) bzw. (III) und deren Herstellung sind dem Fachmann prinzipiell bekannt, beispielsweise aus EP 705 854 A1.

### Mengen der Monomere (a)

Die Menge der monoethylenisch ungesättigten, hydrophob assoziierenden Monomere (a) beträgt 0,1 bis 15 Gew.-% bezogen auf die Gesamtmenge aller Monomere im Copolymer, insbesondere 0,1 bis 10 Gew.-%, bevorzugt 0,2 bis 5 Gew.-%, besonders bevorzugt 0,5 bis 5 Gew.-% und beispielsweise 0,5 bis 2 Gew.-%.

Besonders bevorzugt werden Monomere (a) der allgemeinen Formel (I) zur Herstellung der erfindungsgemäßen Copolymere eingesetzt.

### Monomere (b)

Über die Monomere (a) hinaus umfasst das erfindungsgemäß verwendete, hydrophob assoziierende Copolymer mindestens zwei, davon verschiedene, monoethylenisch ungesättigte Monomere (b), nachfolgend als (b1) und (b2) bezeichnet.

Bei den Monomeren (b1) handelt es sich um neutrale, hydrophile Monomere.

Bei den Monomeren (b2) handelt es sich um anionische, hydrophile Monomere (b2a) und/oder um (Meth)acrylsäureester (b2b). Die (Meth)acrylsäureester selbst sind je nach der Natur der Estergruppe in der Regel nicht hydrophil, können aber unter Formationsbedingungen hydrolysieren und hydrophile Gruppen bilden.

Besonders bevorzugt sind die eingesetzten, hydrophilen Monomere (b1) sowie (b2a) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (b1) sowie (b2a) in Wasser bei Raumtemperatur mindestens 50 g/l, bevorzugt mindestens 150 g/l und besonders bevorzugt mindestens 250 g/l betragen.

Erfindungsgemäß umfasst das Copolymer mindestens ein mindestens ein neutrales, monethylenisch ungesättigtes, hydrophiles Monomer (b1), ausgewählt aus der Gruppe von (Meth)acrylamid, N-Methyl(meth)acrylamid, N,N'-Dimethyl(meth)acrylamid oder N-Methylol(meth)acrylamid. Bevorzugt handelt es sich um (Meth)acrylamid, insbesondere um Acrylamid. Sofern Gemische verschiedener Monomere (b1) eingesetzt werden, sollte es sich bei zumindest 50 mol % der Monomere (b1) um (Meth)acrylamid, bevorzugt Acrylamid handeln.

Erfindungsgemäß umfasst das verwendete Copolymer weiterhin mindestens Monomer (b2a) und/oder (b2b).

Bei den Monomeren (b2a) handelt es sich um hydrophile, monoethylenisch ungesättigte anionische Monomere, welche mindestens eine saure Gruppe ausgewählt aus der Gruppe von - COOH, -SO₃H oder -PO₃H₂ aufweisen bzw. deren Salze. Bevorzugt sind COOH-Gruppen und/oder -SO₃H-Gruppen umfassende Monomere, besonders bevorzugt -SO₃H-Gruppen umfassende Monomere. Selbstverständlich kann es sich auch um die Salze der sauren Monomere handeln. Geeignete Gegenionen umfassen insbesondere Alkalimetallionen wie Li⁺, Na⁺ oder K⁺ sowie Ammoniumionen wie NH₄⁺ oder Ammoniumionen mit organischen Resten.

Beispiele COOH-Gruppen umfassender Monomere umfassen Acrylsäure, Methacrylsäure, Crotonsäure, Itaconsäure, Maleinsäure oder Fumarsäure. Bevorzugt ist Acrylsäure.

Beispiele Sulfonsäuregruppen umfassender Monomere umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt ist oder 2-Acrylamido-2-methylpropansulfonsäure.

Beispiele Phosphonsäuregruppen umfassender Monomere umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Der Vollständigkeit halber sei erwähnt, dass die Monomere (b1) im Zuge der Herstellung und Verwendung der Copolymere unter Umständen zumindest teilweise zu (Meth)acrylsäure hydrolysieren können. Die Hydroplyse kann vom Fachmann selbstverständlich auch bewusst vorgenommen werden. Die erfindungsgemäß verwendeten Copolymere können dementsprechend (Meth)acrylsäureeinheiten umfassen, auch wenn zur Synthese nicht (Meth)acrylsäure selbst eingesetzt wurde. Die Tendenz zur Hydrolyse der Monomere (b1) nimmt mit zunehmendem Gehalt an Sulfonsäuregruppen ab. Dementsprechend ist die Anwesenheit von Sulfonsäuregruppen im erfindungsgemäß verwendeten Copolymer empfehlenswert. Bei den Monomeren (b2b) handelt es sich um (Meth)acrylsäureester der allgemeinen Formel H₂C=C(R¹⁵)-COOR¹⁶. Beispielsweise kann es sich bei R¹⁶ um Methyl-, Ethyl-, 1-Propyl-, 2-Propyl-, 1-Butyl-, 2-Butyl-, i-Butyl, 1-Pentyl-, 1-Hexyl-, 1-Heptyl- oder 1-Octylreste handeln.

Hierbei steht R¹⁵ für H oder Methyl, bevorzugt für H. R¹⁶ steht für einen geradkettigen oder bevorzugt verzweigten Alkylrest mit 1 bis 8 Kohlenstoffatomen.

Bevorzugt steht R¹⁶ für einen sekundären Alkylrest -CH(R¹⁷)(R^{17'}), wobei R¹⁷ und R^{17'} für geradkettige oder verzweigte Alkylreste stehen, mit der Maßgabe, dass die Gesamtzahl der Kohlenstoffatome in den Resten R¹⁷ und R^{17'} 2 bis 7 beträgt. Beispiele derartiger sekundärer Alkylreste umfassen 2-Propyl-, 2-Butyl- oder 2-Pentylreste.

Weiterhin bevorzugt steht R¹⁶ für einen tertiären Alkylrest -C(R¹⁸)(R^{18'})(R^{18"}), wobei R¹⁸, R^{18'}, R^{18"} für geradkettige oder verzweigte Alkylreste stehen, mit der Maßgabe, dass die Gesamtzahl der Kohlenstoffatome in den Resten R¹⁸, R^{18'} und R^{18"} 3 bis 7 beträgt. Ein besonders bevorzugter tertiärer Alkylrest ist ein t-Butylrest -C(CH₃)₃.
Die Estergruppen der (Meth)acrylsäureester (b2b) können nach dem Einbau in das Copolymer zu -COOH-Gruppen bzw. Salzen davon hydrolysieren, insbesondere unter Formationsbedingungen, d.h. insbesondere erhöhter Temperatur. Hierdurch bilden sich in-situ Polymere, welche die Einheiten (b1) sowie (b2a) umfassen. Ester mit sekundären und insbesondere tertiären Alkylresten hydrolyieren schneller als Ester primärer Alkylreste und sind daher besonders bevorzugt.

Die erfindungsgemäß verwendeten Copolymere können darüber hinaus optional mindestens ein monoethylenisch ungesättigtes, kationisches, Ammoniumionen aufweisendes Monomer (b3) umfassen.

Geeignete kationische Monomere (b3) umfassen insbesondere Ammoniumgruppen aufweisende Monomere, insbesondere Ammoniumderivate von N-(ω-Aminoalkyl)(meth)acrylamiden oder ω-Aminoalkyl(meth)acrylestern sowie Diallyldimethylammoniumsalze.

Insbesondere kann es sich bei Ammoniumgruppen aufweisenden Monomeren (b3) um Verbindungen der allgemeinen Formeln H₂C=C(R⁸)-CO-NR⁹-R¹⁰-NR¹¹₃⁺ X- (Va) und/oder H₂C=C(R⁸)-COO-R¹⁰-NR¹¹₃⁺ X- (Vb) handeln. Hierbei steht R⁸ für H oder Methyl, R⁹ für H oder eine C₁- bis C₄-Alkylgruppe, bevorzugt H oder Methyl und R¹⁰ für eine bevorzugt lineare C₁- bis C₄-Alkylengruppe, beispielsweise eine 1,2-Ethylengruppe -CH₂-CH₂- oder eine 1,3-Proplyengruppe -CH₂-CH₂-CH₂-.

Bei den Resten R¹¹ handelt es sich unabhängig voneinander um C₁- bis C₄-Alkylreste, bevorzugt Methyl oder eine Gruppe der allgemeinen Formel -R¹²-SO₃H, wobei R¹² für eine bevorzugt lineare C₁- bis C₄-Alkylengruppe oder eine Phenylgruppe steht, mit der Maßgabe, dass es sich im Regelfalle bei nicht mehr als einem der Substituenten R¹¹ um einen Sulfonsäuregruppen aufweisenden Substituenten handelt. Besonders bevorzugt handelt es sich bei den drei Substituenten R¹¹ um Methylgruppen, d.h. das Monomer weist eine Gruppe -N(CH₃)₃⁺ auf. X- steht in obiger Formel für ein einwertiges Anion, beispielsweise Cl⁻. Selbstverständlich kann X- auch für einen entsprechenden Bruchteil eines mehrwertigen Anions stehen, obwohl dies nicht bevorzugt ist. Beispiele bervorzugter Monomere (b3) der allgemeinen Formel (Va) bzw. (Vb) umfassen Salze von 3-Trimethylammonium-propyl(meth)acrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Die erfindungsgemäß verwendeten Copolymere können darüber hinaus noch weitere, von den hydrophilen Monomeren (b1), (b2) und (b3) verschiedene monoethylenisch ungesättigte hydrophile Monomere (b4) umfassen. Beispiele derartiger Monomere umfassen Hydroxy- und oder Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹)-COO-(-CH₂-CH(R¹³)-O-)_{b}-R¹⁴ (VIa) bzw. H₂C=C(R¹)-O-(-CH₂-CH(R¹³)-O-)_{b}-R¹⁴ (Vlb) wobei R¹ wie oben definiert ist und b für eine Zahl von 2 bis 200, bevorzugt 2 bis 100 steht. Bei den Resten R¹³ handelt es sich unabhängig voneinander um H, Methyl oder Ethyl, bevorzugt H oder Methyl, mit der Maßgabe, dass es sich bei mindestens 50 mol % der Reste R¹³ um H handelt. Bevorzugt handelt es sich bei mindestens 75 mol % der Reste R¹³ um H, besonders bevorzugt bei mindestens 90 mol % und ganz besonders bevorzugt ausschließlich um H. Bei dem Rest R¹⁴ handelt es sich um H, Methyl oder Ethyl, bevorzugt H oder Methyl. Weitere Beispiele von Monomeren (b4) umfassen N-Vinylderivate wie beispielsweise N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden.

Bevorzugt eingesetzte Copolymere umfassen Monomere (b1) sowie (b2a), aber keine Monomere (b2b).

Weiterhin bevorzugt eingesetzte Copolymere umfassen Monomere (b1) sowie (b2b), aber keine Monomere (b2a). Wie bereits dargestellt können aber auch in diesem Falle die Estergruppen der Monomere (b2b) zu -COOH-Gruppen hydrolysieren, insbesondere unter Formationsbedingungen, so dass auch solche Copolymere einige zeit nach der Anwendung -COOH-Gruppen aufweisen können.

Die Menge aller Monomere (b) im erfindungsgemäßen Copolymer beträgt erfindungsgemäß 85 bis 99,9 Gew.-% bezogen auf die Gesamtmenge aller Monomere im Copolymer, bevorzugt 90 bis 99,8 Gew.-%.

Die Menge der neutralen, hydrophilen Monomere (b1) beträgt hierbei in der Regel 30 bis 95 Gew. %, bevorzugt 30 bis 85 Gew. % und besonders bevorzugt 30 bis 70 Gew. % bezüglich der Gesamtmenge aller eingesetzten Monomere.

Sofern das Copolymer nur neutrale Monomere (b1) und anionische Monomere (b2a) umfasst, hat es sich bewährt, die neutralen Monomere (b1) in einer Menge 30 bis 95 Gew. % und die anionischen Monomere (b2a) in einer Menge von 4,9 bis 69,9 Gew. % einzusetzen, wobei die Menge jeweils auf die Gesamtmenge aller eingesetzten Monomere bezogen ist. Bevorzugt werden bei dieser Ausführungsform die Monomere (b1) in einer Menge 30 bis 80 Gew. % und die anionischen Monomere (b2a) in einer Menge von 19,9 bis 69,9 Gew. % eingesetzt, und besonders bevorzugt werden die Monomere (b1) in einer Menge 40 bis 70 Gew. % und die anionischen Monomere (b2a) in einer Menge von 29,9 bis 59,9 Gew. % eingesetzt

Sofern das Copolymer neutrale Monomere (b1), anionische Monomere (b2a) und kationische Monomere (b3) umfasst, hat es sich bewährt, die neutralen Monomere (b1) in einer Menge von 30 bis 95 Gew. % und die anionischen (b2a) und kationischen Monomere (b3) zusammen in einer Menge von 4,9 bis 69,9 Gew. % einzusetzen, mit der Maßgabe, dass das molare Verhältnis (b2a) / (b3) 0,7 bis 1,3 beträgt. Bevorzugt beträgt das molare Verhältnis (b2a) / (b3) 0,8 bis 1,2 und beispielsweise 0,9 bis 1,1. Durch diese Maßnahme lassen sich Copolymere erhalten, welche besonders unempfindlich auf Salzfracht reagieren. Bevorzugt werden bei dieser Ausführungsform die Monomere (b1) in einer Menge 30 bis 80 Gew. % und die anionischen und kationischen Monomere (b2a) + (b3) zusammen in einer Menge von 19,9 bis 69,9 Gew. % eingesetzt, und besonders bevorzugt werden die Monomere (b1) in einer Menge 40 bis 70 Gew. % und die anionischen und kationischen Monomere (b2a) + (b3) zusammen in einer Menge von 29,9 bis 59,9 Gew. % eingesetzt, wobei jeweils das bereits genannte molare Verhältnis eingehalten werden sollte.
Die Menge der Monomere (b2b) wird vom Fachmann so bemessen, dass die Wasserlöslichkeit des Copolymers durch die Verwendung der Monomere (b2b) nicht beeinträchtigt wird. Die Menge der Monomere (b2b) sollte daher in aller Regel -sofern vorhanden- 20 Gew. %, bezogen auf die Gesamtmenge aller Monomere, nicht überschreiten. Bevorzugt sollte die Menge 10 Gew. % nicht überschreiten. Sie kann beispielsweise 0,5 bis 5 Gew. % betragen.

### Monomere (c)

Neben den hydrophilen Monomeren (a) und (b) können die erfindungsgemäßen Copolymere optional von den Monomeren (a) und (b) verschiedene ethylenisch ungesättigte Monomere, bevorzugt monoethylenisch ungesättigte Monomere (c) umfassen. Selbstverständlich können auch Gemische mehrerer verschiedener Monomere (c) eingesetzt werden.

Derartige Monomere können zur Feinsteuerung der Eigenschaften des erfindungsgemäß verwendeten Copolymers verwendet werden. Falls überhaupt vorhanden, kann die Menge derartiger optional vorhandener Monomere (c) bis zu 14,9 Gew. % betragen, bevorzugt bis zu 9,9 Gew. %, besonders bevorzugt bis zu 4,9 Gew. %, jeweils bezogen auf die Gesamtmenge aller Monomere. Ganz besonders bevorzugt sind keine Monomere (c) vorhanden.

Bei den Monomeren (c) kann es sich beispielsweise um monoethylenisch ungesättigte Monomere handeln, welche einen hydrophoberen Charakter haben als die hydrophilen Monomere (b1) und (b2a) und die dementsprechend nur in geringem Maße wasserlöslich sind. Im Regelfalle beträgt die Löslichkeit der Monomere (c) in Wasser bei Raumtemperatur weniger als 50 g/l, insbesondere weniger als 30 g/l. Beispiele derartiger Monomere umfassen N-Alkyl- und N,N'-Dialkyl(meth)acrylamide, wobei die Anzahl der Kohlenstoffatome in den Alkylresten zusammen zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

### Herstellung der hydrophob assoziierenden Copolymere

Die erfindungsgemäß verwendeten Copolymere können nach dem Fachmann prinzipiell bekannten Methoden durch radikalische Polymerisation der Monomere (a), (b) sowie optional (c) hergestellt werden, beispielsweise durch Lösungs- oder Gelpolymerisation in wässriger Phase.

Zur Polymerisation werden die Monomere (a), (b), optional (c), Initiatoren sowie optional weitere Hilfsstoffe zur Polymerisation in einem wässrigen Medium eingesetzt.

In einer bevorzugten Ausführungsform wird die Herstellung mittels Gelpolymerisation in wässriger Phase vorgenommen. Zur Gelpolymerisation wird zunächst eine Mischung aus den Monomeren (a), (b) sowie optional (c), Initiatoren sowie gegebenenfalls weiteren Hilfsstoffen mit Wasser oder einem wässrigen Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt mindestens 80 Gew.-% und besonders bevorzugt mindestens 90 Gew.-% beträgt. Zu nennen als organische Lösemittel sind hierbei insbesondere mit Wasser mischbare Alkohole wie Methanol, Ethanol oder Propanol. Saure Monomere können vor der Polymerisation ganz oder teilweise neutralisiert werden. Die Konzentration aller Komponenten mit Ausnahme der Lösemittel im Zuge der Polymerisation beträgt üblicherweise ca. 20 bis 60 Gew.-%, bevorzugt ca. 30 bis 50 Gew.-%. Die Polymerisation sollte insbesondere bei einem pH-Wert im Bereich von 5,0 bis 7,5 und vorzugsweise bei einem pH-Wert von 6,0 durchgeführt werden.

### Polymerisation in Gegenwart einer nicht polymerisierbaren, grenzflächenaktiven Verbindung

In einer bevorzugten Ausführungsform der Erfindung werden die verwendeten Copolymere in Gegenwart mindestens einer nicht-polymerisierbaren, oberflächenaktiven Verbindung (T) hergestellt.

Bei der nicht polymerisierbaren, oberflächenaktiven Verbindung (T) handelt es sich vorzugsweise um mindestens ein nicht-ionisches Tensid, aber auch anionische und kationische Tenside sind geeignet, sofern sie an der Polymerisationsreaktion nicht teilnehmen. Es kann sich insbesondere um Tenside, bevorzugt nichtionische Tenside der allgemeinen Formel R¹³-Y' handeln, wobei R¹³ für einen Kohlenwasserstoffrest mit 8 bis 32, bevorzugt 10 bis 20 und besonders bevorzugt 12 bis 18 Kohlenstoffatomen steht und Y' für eine hydrophile Gruppe, bevorzugt eine nichtionische hydrophile Gruppe, insbesondere eine Polyalkoxygruppe.

Bei dem nicht-ionischen Tensid handelt es sich bevorzugt um einen ethoxylierten langkettigen, aliphatischen Alkohol, welcher optional aromatische Anteile enthalten kann.
Exemplarisch seinen genannt: C₁₂C₁₄-Fettalkoholethoxylate, C₁₆C₁₈-Fettalkoholethoxylate, C₁₃-Oxoalkoholethoxylate, C₁₀-Oxoalkoholethoxylate, C₁₃C₁₅-Oxoalkoholethoxylate, C₁₀-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheite. Optional können auch noch geringe Mengen von höheren Alkylenoxyeinheiten, insbesondere Propylenoxy- und/oder Butylenoxyoxyeinheiten vorhanden sein, wobei die Menge als Ethylenoxyeinheiten aber in der Regel mindestens 80 mol % bezüglich aller Alkylenoxyeinheiten betragen sollte.

Geeignet sind insbesondere Tenside ausgewählt aus der Gruppe der ethoxylierten Alkylphenole, der ethoxylierten, gesättigten iso-C13-Alkoholen und/oder der ethoxylierten C10-Guerbetalkoholen, wobei jeweils 5 bis 20 Ethylenoxyeinheiten, bevorzugt 8 bis 18 Ethylenoxyeinheiten in Alkoxyresten vorhanden sind.

Überraschenderweise führt der Zusatz nicht polymerisierbarer, grenzflächenaktiver Verbindungen (T) während der Polymerisation zu einer deutlichen Verbesserung anwendungstechnischen Eigenschaften des Copolymers beim Polymerfluten. Insbsondere wird die Verdickungswirkung erhöht und außerdem reduziert sich der Gelanteil des Copolymers. Dieser Effekt lässt sich vermutlich folgendermaßen erklären, ohne dass die Erfindung damit auf diese Erklärung festgelegt sein soll. Bei der Polymerisation ohne Anwesenheit eines Tensids bilden die hydrophob assoziierenden Comonomere (a) in dem wässrigen Reaktionsmedium Mizellen. Bei der Polymerisation führt dies dazu, dass die hydrophob assoziierenden Bereiche blockweise in das Polymer eingebaut werden. Ist nun erfindungsgemäß bei der Herstellung der Copolymere eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die hydrophob assoziierenden Monomere in kürzeren Blöcken eingebaut. Gleichzeitig ist die Anzahl dieser kürzeren Blöcke pro Polymerkette größer. Somit unterscheidet sich der Aufbau der in Gegenwart eines Tensids hergestellten Copolymere von denen ohne Anwesenheit eines Tensids.

Die nicht polymerisierbaren, grenzflächenaktiven Verbindungen (T) können im Regelfalle in einer Menge von 0,1 bis 5 Gew. % bezüglich der Menge aller eingesetzten Monomere eingesetzt werden.

Das Gewichtsverhältnis der eingesetzten, nicht polymerisierbaren, grenzflächenaktiven Verbindungen (T) zu den Monomeren (a) beträgt in der Regel 4:1 bis 1:4, bevorzugt 2:1 bis 1:2, besonders bevorzugt 1,5 : 1 bis 1:1,5 und beispielsweise ca. 1:1.

### Durchführung der Polymerisation

Zur Polymerisation werden zunächst die erforderlichen Komponenten miteinander gemischt. Auf die Reihenfolge, mit der die Komponenten zur Polymerisation gemischt werden, kommt es nicht an, es ist lediglich wichtig, dass bei der bevorzugten Polymerisationsmethode die nicht polymerisierbare, grenzflächenaktive Verbindung (T) noch vor der Initiierung der Polymerisation dem wässrigen Polymerisationsmedium zugesetzt wird.

Die Mischung wird anschließend thermisch und/oder fotochemisch polymerisiert, vorzugsweise bei -5 °C bis 80 °C. Sofern thermisch polymerisiert wird, setzt man bevorzugt Polymerisationsinitiatoren ein, die schon bei vergleichsweise niedriger Temperatur die Polymerisation starten können, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10 °C vorgenommen. Man kann auch fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10 °C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichen.

In einer weiteren bevorzugten Ausführungsform der Polymerisation kann man auch die Reaktion mit einer Mischung aus einem Redoxinitiatorsystem sowie einem thermischen Initiatior, der erst bei höheren Temperaturen zerfällt ausführen. Hierbei kann es sich beispielsweise um einen wasserlöslichen Azoinitiator handeln, der im Temperaturbereich von 40°C bis 70°C zerfällt. Die Polymerisation startet hier zunächst bei niedrigen Temperaturen von beispielsweise 0 bis 10°C durch das Redoxinitiatorsystem. Durch die freiwerdende Reaktionswärme erwärmt sich die Mischung und hierdurch wird zusätzlich die Polymerisation durch den erst bei höheren Temperaturen zerfallenden Initiator gestartet.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man beispielsweise eine Polymerisationsapparatur, welche ein Transportband zur Aufnahme der zu polymerisierenden Mischung verfügt. Das Transportband ist mit Einrichtungen zum Erwärmen und/oder zum Bestrahlen mit UV-Strahlung ausgestattet. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Das erhaltene Gel wird nach der Polymerisation vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Weitere Einzelheiten zur Durchführung einer Gelpolymerisation sind beispielsweise in DE 10 2004 032 304 A1, Abschnitte [0037] bis [0041] offenbart.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.

Die erhaltenen Copolymere weisen in der Regel ein gewichtsmittleres Molekulargewicht M_{w} von 1*10⁶ g/mol bis 30*10⁶ g/mol auf, bevorzugt 5*10⁶ g/mol bis 20*10⁶ g/mol.

### Wässrige Formulierung für Verfahrensschritt (1)

Zur Ausführung des Verfahrens wird eine wässrige Formulierung eingesetzt, welche neben Wasser mindestens das beschriebene hydrophob assoziierende Copolymer umfasst. Selbstverständlich können auch Gemische verschiedener hydrophob assoziierender Copolymere eingesetzt werden.

Die Formulierung kann neben Wasser auch noch mit Wasser mischbare organische Lösemittel umfassen, wobei die Menge des Wassers in der Regel mindestens 75 Gew. %, bevorzugt mindestens 90 Gew. % und besonders bevorzugt mindestens 95 Gew. % bezüglich der Summe aller eingesetzten Lösemittel umfassen soll. Ganz besonders bevorzugt wird ausschließlich Wasser als Lösemittel eingesetzt. Die Formulierung kann in Süßwasser aber auch in Salzen enthaltendem Wasser angesetzt werden. Die Formulierung kann bevorzugt hergestellt werden, indem man das Wasser vorlegt, das Copolymer als Pulver einstreut und mit dem Wasser vermischt, wobei das Ansetzen bevorzugt bei Umgebungstemperatur erfolgt.

Erfindungsgemäß beträgt die Konzentration des Polymers in der Formulierung 0,1 bis 3 Gew.-% bezüglich der Summe aller Komponenten der wässrigen Formulierung. Bevorzugt beträgt die Menge 0,5 bis 3 Gew. % und besonders bevorzugt 1 bis 3 Gew. %.

Die Konzentration des Copolymers und damit die Viskosität der verwendeten Formulierung kann vom Fachmann je nach den Verhältnissen in der Formation bestimmt werden.

Die Formulierung kann optional noch weitere Komponenten umfassen, beispielsweise Vernetzer, Biozide, Stabilisatoren oder Salze.

Bei weiteren Komponenten kann es sich insbesondere um wasserlösliche Vernetzer handeln, welche eine Vernetzung des hydrophob assoziierenden Copolymers unter Lagerstättenbedingungen bewirken können.

Bei Vernetzern kann es sich beispielsweise um zwei-, drei- oder vierwertige Metallionen enthaltende wasserlösliche Verbindungen handeln, beispielsweise Al(III)-, Cr(III)- oder Zr(IV)-Ionen enthaltende Verbindungen wie beispielsweise Chrom(III)acetat, Aluminium(III)citrat, Zirkonium(IV)-Salze wie Zirkonium(IV)-Lactat oder Zirkonium(IV)-Acetat. Weiterhin kann es sich um Borsäure oder Salze davon handeln.

Weiterhin kann es sich um organische Vernetzer handeln, beispielsweise Aldehyde wie Formaldehyd, Glyoxal oder Glutardialdehyd oder um mindestens zwei Amino- oder Ammoniumgruppen umfassende organische Verbindungen, wie beispielsweise Polyethylenimine, Polyvinylamin oder Polyetheramine.

Es kann sich auch um mikroverkapselte Vernetzer handeln, bei denen der Vernetzer erst nach dem Injizieren der Formulierung in die Formation freigesetzt wird.

Die Mengen von Vernetzer werden vom Fachmann je nach den gewünschten Eigenschaften, beispielsweise dem gewünschten Vernetzungsgrad gewählt. Die Vernetzermenge kann beispielsweise 1 bis 10 Gew. % bezogen auf die Menge des eingesetzten Polymers betragen.

### Durchführung von Verfahrensschritt (1)

Beim Durchführen von Verfahrensschritt (1) wird die oben beschriebene wässrige Formulierung, welches mindestens das beschriebene, hydrophob assoziierende Copolymer umfasst, durch mindestens eine Bohrung in die Formation injiziert.

Verfahrensschritt (1) kann als erster Verfahrensschritt und danach Verfahrensschritt (2) des erfindungsgemäßen Verfahrens ausgeführt werden. Verfahrensschritt (1) kann aber auch erst nach einer ersten Durchführung von Verfahrensschritt (2) ausgeführt werden, insbesondere nach Wasserfluten der Formation. Diese Variante ist dann empfehlenswert, wenn die Wasserproduktion infolge fortgesetzten Wasserflutens bereits signifikant gestiegen ist.

Das Injizieren der wässrigen Formulierung kann mittels üblicher Vorrichtungen vorgenommen werden. Die Formulierung kann mittels üblicher Pumpen injiziert werden. Die Bohrungen sind üblicherweise mit einzementierten Stahlrohren ausgekleidet, und die Stahlrohre sind an der gewünschten Stelle perforiert. Die Formulierung tritt durch die Perforation aus der Bohrung in die Erdölformation ein. Über den mittels der Pumpen angelegten Druck wird in prinzipiell bekannter Art und Weise die Strömungsgeschwindigkeit der Formulierung und damit auch die Scherbelastung festgelegt, mit der die wässrige Formulierung in die Lagerstätte eintritt. Das Verfahren kann aber selbstverständlich auch durchgeführt werden, wenn das Bohrloch nicht ausgekleidet ist.
Je nach der Art der unterirdischen Formation sowie den zu blockierenden Bereichen wählt der Fachmann geeignete Copolymere aus. Die Bildung eines Gels in der unterirdischen Formation kann je nach Copolymer unter Verwendung von Vernetzern oder auch ohne die Verwendung von Vernetzern erfolgen.

Die erfindungsgemäß als Bestandteil der wässrigen Formulierung verwendeten Copolymere, insbesondere solche, die Monomere (a), (b1) sowie (b2a) umfassen,zeichnen sich innerhalb bestimmter Temperaturbereiche durch thermoverdickendes Verhalten aus, d.h. die wässrigen Formulierungen zeichnen sich dadurch aus, dass deren Viskosität bei Raumtemperatur geringer ist als bei höheren Temperaturen. Im Regelfalle durchläuft die Viskosität ein Maximum im Bereich von ca. 50 bis 80°C. Die Einzelheiten hierzu sind im experimentellen Teil dargestellt. Bevorzugte Copolymere für diese Anwendung umfassen neben den Monomeren (a) und (b1) Sulfonsäuregruppen aufweisende Monomere (b2a). Besonders bevorzugt kann es sich hierbei um Monomere (a), Acrylamid sowie 2-Acrylamido-2-methylpropansulfonsäure umfassende Copolymere.

In einer ersten bevorzugten Ausführungsform der Erfindung kann man daher zum Blockieren permeabler Bereiche der Formation das thermoverdickende Verhalten der verwendeten Copolymere ausnutzen. Der Formulierung müssen für diese Ausführungsform keine Vernetzer zugesetzt werden.

Bevorzugt sollte bei dieser ersten bevorzugten Ausführungsform die Temperatur der wässrigen Formulierung vor dem Injizieren niedriger sein als die Lagerstättentemperatur. "Vor dem Injizieren" bezieht sich auf die Temperatur der Formulierung an der Erdoberfläche, bevor sie in die Bohrung injiziert wird. Bevorzugt beträgt die Temperatur der wässrigen Formulierung vor dem Injizieren in die Lagerstätte weniger als 35°C, besonders bevorzugt weniger als 30°C und beispielsweise ca. 15°C bis 25°C.

Die Temperatur der wässrigen Formulierung des hydrophob assoziierenden Copolymers ist bei dieser bevorzugten Ausführungsform geringer als die Lagerstättentemperatur. Nach dem Eintritt in die Erdölformation strömt die wässrige Formulierung naturgemäß in die permeablen Bereiche der Formation mit geringem Strömungswiderstand ein. Unter dem Einfluss der Lagerstättentemperatur erwärmt sich die wässrige Formulierung zunehmend und dementsprechend nimmt nach und nach ihre Viskosität zu, bis schließlich ein Gel gebildet wird, welches eine so hohe Viskosität aufweist, dass die permeablen Bereiche der Formation blockiert werden. Diese Variante eignet sich insbesondere für Formationen mit einer Lagerstättentemperatur von mehr als 40°C, bevorzugt mehr als 45°C, insbesondere 40°C bis 100°C, bevorzugt 45°C bis 90°C, besonders bevorzugt 50°C bis 75°C. Die Temperatur der wässrigen Formulierung sollte bei dieser Ausführungsform vor dem Injizieren in die Lagerstätte mindestens 10°C, bevorzugt mindestens 20°C niedriger sein als die Lagerstättentemperatur.

Die erfindungsgemäß verwendeten, hydrophob assoziierenden Copolymere, insbesondere die bereits genannten, die Monomere (a), (b1) sowie (b2a) umfassenden Copolymere weisen weiterhin scherverdünnendes Verhalten auf, d.h. ihre Viskosität nimmt mit zunehmender Scherung ab. Daher ist es empfehlenswert, die wässrigen Formulierungen mit hoher Strömungsgeschwindigkeit zu injizieren. Dadurch wird das Aufwärmen der Formulierung verzögert, aber durch das scherverdünnende Verhalten wird das Copolymer beim Eintritt in die Formation nicht mechanisch abgebaut, so dass es nach Rückgang der Scherung wieder viskoser wird.

In einer zweiten bevorzugten Ausführungsform der Erfindung beträgt daher die Scherrate beim Eintritt der wässrigen Copolymerformulierung in die Formation daher mindestens 30000 s⁻¹, bevorzugt mindestens 60000 s⁻¹ und besonders bevorzugt mindestens 90000 s⁻¹. Die Scherbelastung beim Eintritt in die Formation kann vom Fachmann in prinzipiell bekannter Art und Weise auf Basis des Gesetz' von Hagen-Poiseuille unter Verwendung der beim Eintritt in die Formation durchströmten Fläche, dem mittleren Porenradius und dem Volumenstrom errechnet werden. Die durchschnittliche Porosität der Formation kann in prinzipiell bekannter Art und Weise durch Messungen an Bohrkernen ermittelt werden. Die Scherbelastung ist naturgemäß umso größer, je größer der in die Formation injizierte Volumenstrom an wässriger Formulierung ist.

Zur Ausführung der geschilderten Ausführungsformen 1 und 2 des Verfahrens besonders bevorzugte Copolymere umfassen Monomere (a) der allgemeinen Formel H₂C=CH-O-(CH₂)_{n'}-O-(-CH₂-CH₂-O-)ₖ-(-CH₂-CH(R⁴)-O-)ₗ-H (la), wobei n' für 2 bis 6, bevorzugt 2 bis 4 und besonders bevorzugt 4 steht. R⁴ steht in der bevorzugten Variante für einen Kohlenwasserstoffrest mit 3 bis 10 Kohlenstoffatomen, insbesondere für einen n-Propylrest. Weiterhin steht in Formel (la) k für eine Zahl von 20 bis 30 und l für eine Zahl von 6 bis 20, bevorzugt 8 bis 18. Die Menge der Monomere (a) der Formel (la) beträgt 0,2 bis 5 Gew.-%, bevorzugt 0,5 bis 2 Gew.-%. Als Monomer (b1) umfasst das für die Ausführungsformen 1 und 2 bevorzugte Copolymer 40 bis 60 Gew. % Acrylamid und als Monomer (b2a) 35 bis 55 Gew. % eines Sulfonsäuregruppen aufweisenden Monomers (b2a), bevorzugt 2-Acrylamido-2-methylpropansulfonsäure bzw. Salze davon. Besonders bevorzugt werden ausschließlich Sulfonsäuregruppen aufweisende Monomere (b2a) eingesetzt.

In einer dritten bevorzugten Ausführungsform der Erfindung wird eine Formulierung verwendet, welche zusätzlich einen oder mehrere Vernetzer enthält, die das Vernetzen des Polymers unter Lagerstättenbedingungen bewirken können. Die Vernetzungsreaktion tritt also erst im Zuge des Erwärmens der Formulierung auf Lagerstättentemperatur ein. Hierzu können die oben beschriebenen Vernetzer in der wässrigen Formulierung eingesetzt werden. Durch die Vernetzung des Polymers wird die Festigkeit des Gels zum Blockieren der Formation verbessert. Auch für die dritte Ausführungsform können die für Ausführungsform 1 und 2 besonders geeigneten Copolymere bevorzugt verwendet werden.

Für die dritte Ausführungsform können mit besonderem Vorteil Copolymere, welche COOH-Gruppen aufweisen, eingesetzt werden oder solche, welche unter Formationsbedingungen COOH-Gruppen bilden.

Von besonderem Vorteil für diese dritte Ausführungsform sind daher Copolymere, welche die Monomere (a), (b1) sowie (b2b) umfassen. Bevorzugt sind insbesondere Monomere (a) der allgemeinen Formel H₂C=CH-O-(CH₂)_{n'}-O-(-CH₂-CH₂-O-)ₖ-(-CH₂-CH(R⁴)-O-)ₗ-H (Ia) umfassende Copolymere. Bevorzugte Bereiche für n', k, l und R⁴ wurden bereits oben genannt. (b1) ist bevorzugt Acrylamid und bei (b2b) handelt es sich insbesondere um leicht hydrolysierbare Ester mit sekundären oder tertiären Estergruppen, insbesondere (Meth)acrylsäure-t-butylester. Bevorzugte Mengen sind 0,2 bis 5 Gew. % der Monomere (la), 70 bis 99,7 Gew. % (b1) sowie 0,1 bis 10 Gew. %, bevorzugt 0,2 bis 5 Gew. % (b2b).
Die Wirkungsweise der Vernetzer ist dem Fachmann prinzipiell bekannt. Wir verweisen hierzu auf die eingangs zitierte Literatur, beispielsweise aus dem Übersichtsartikel Borling et al. "Pushing out the oil with Conformance Control" in Oilfield Review (1994), Seiten 44 ff*..* Wesentlich ist, dass vernetzende Reaktionen nicht schon bei Raumtemperatur, sondern erst bei höheren Temperaturen, insbesondere bei Temperaturen > 50°C mit nennenswerter Geschwindigkeit ablaufen. Bei höheren Temperaturen können im Polymer vorhandene Gruppen -CONR'₂ und/oder-COOR¹⁶ zu -COOH-Gruppen hydrolysieren, und die -COOH-Gruppen verschiedener Copolymerketten können über Komplexbildung mit in der Formulierung enthaltenen Metallionen miteinander vernetzt werden. Ebenso können COOH-Gruppen mit Polyethyleniminen reagieren und/oder Salze bilden und somit die Copolymere vernetzen. Durch die Vernetzung bildet sich ein hochviskoses Gel, welche die Formation verstopft.

In einer vierten bevorzugten Ausführungsform der Erfindung werden in der wässrigen Formulierung Copolymere eingesetzt, welche neben den Monomeren (b1) und (b2a) auch noch kationische Monomere (b3) umfassen.

Bevorzugte Copolymere für diese vierte Ausführungsform umfassen 0,2 bis 5 Gew. %, bevorzugt 0,5 bis 2 Gew. % Monomere (a) der allgemeinen Formel (la) sowie als Monomere (b1) 30 bis 40 Gew. % Acrylamid. Sie umfassen darüber hinaus 25 bis 35 Gew. % mindestens eines Sulfonsäuregruppen aufweisenden Monomers (b2a), bevorzugt 2-Acrylamido-2-methylpropansulfonsäure bzw. Salze davon sowie 25 bis 35 Gew. % mindestens eines kationischen, Ammoniumionen aufweisenden Monomers, bevorzugt Salze von Dialkyldiallylammonium, 3-Trimethylammoniumpropyl(meth)acrylamiden und 2-Trimethylammoniumethyl(meth)acrylaten.

Diese Ausführungsform kann beispielsweise in silikatischen Formationen, insbesondere Sandstein-Formationen eingesetzt werden. Sie kann aber selbstverständlich auch in anderen, beispielsweise carbonatischen Formationen verwendet werden. Silikatische Formationen weisen anionische Zentren an der Oberfläche auf, die gut mit den kationischen Zentren der eingesetzten Copolymere wechselwirken können. Somit kann ein Polymerfilm auf der Oberfläche der Gesteinsformation gebildet werden, der freie Querschnitte verengt. Auf der polymermodifizierten Oberfläche kann weiteres Polymer absorbieren. Selbstverständlich kann diese Ausführungsform auch mit einer Vernetzung des Copolymers kombiniert werden. Hierfür können die bereits geschilderten Vernetzer verwendet werden.

In einer fünften bevorzugten Ausführungsform der Erfindung wird vor dem Injizieren des erfindungsgemäß verwendeten Copolymers zunächst eine wässrige Formulierung eines kationische Gruppen aufweisenden Polymers injiziert. Beispiele geeigneter kationischer Polymere umfassen Poly(diallyl-dimethyl- ammonium chlorid), Poly(N-acrylamido propyl - N,N,N-trimethylammonium chlorid) oder Poly(N-methacrylato propyl - N,,N-dimethyl-N-benzyl-ammonium chlorid) oder entsprechende Copolymere, beispielsweise mit Acrylamid als Comonomer.

Im Anschluss an die Injektion des kationischen Polymers wird die wässrige Formulierung des erfindungsgemäß verwendeten Copolymers in die Formation injiziert, und die Oberfläche wird dadurch kationisch modifiziert. Auf der kationisch modifizierten Oberfläche kann das erfindungsgemäß verwendete, anionische Gruppen aufweisende Copolymer gut adsorbieren. In einer bevorzugten Ausführungsform der Erfindung kann das Injizieren von wässrigen Formulierungen eines kationischen Polymers und des erfindungsgemäß verwendeten Copolymers ein-oder mehrmals wiederholt werden. Auf diese Art und Weise bildet sich ein immer dicker werdender, mehrschichtig aufgebauter Polymerfilm auf der Formationsoberfläche.

Das Injizieren der wässrigen Copolymerformulierung kann sowohl durch eine oder mehrere Injektionsbohrungen und/oder eine oder mehrere Produktionsbohrungen erfolgen. Dies richtet sich je nach konkreten Verhältnissen in der Formation.

Die Injektion in eine Produktionsbohrung ist beispielsweise dann empfehlenswert, wenn unter einer erdölführenden Schicht eine wasserführende Schicht angeordnet ist und zunehmend Wasser aus der wasserführenden Schicht gefördert wird. Zur Injektion in Produktionsbohrungen wird die Injektion wässriger Flutmedien in die Injektionsbohrungen in der Regel unterbrochen. Durch dem Fachmann prinzipiell bekannte Maßnahmen kann sichergestellt werden, dass die wässrige Copolymerformulierung tatsächlich in die wasserführende Zone injiziert wird und nicht in die ölführende Zone. Beispielsweise kann durch eine geeignete Auskleidung des Bohrloches Stahlrohen, welche genau im Bereich der wasserführenden Schicht perforiert sind, die Copolymerformulieurg gezielt in die wasserführende Schicht injiziert werden. Zusätzlich kann das Eindringen von Polymerformulierung in die ölführende Schicht verhindert werden, indem man gleichzeitig eine inerte Schutzflüssigkeit in die ölführende Schicht injiziert.

Beim Injizieren in eine oder mehrere Injektionsbohrungen strömt die wässrige Copolymerformulierung naturgemäß in die permeablen Bereiche der Formation mit geringem Strömungswiderstand ein, und somit genau durch die Bereiche, welche blockiert werden sollen.

### Verfahrensschritt (2)

In Verfahrensschritt (2) erfolgt die eigentliche Erdölförderung durch Injizieren eines wässrigen Flutmediums in die mindestens eine Injektionsbohrung und Entnahme von Erdöl durch die mindestens eine Produktionsbohrung. Das injizierte wässrige Flutmedium hält den Druck aufrecht und drückt das Erdöl von den Injektionsbohrungen aus in Richtung der Produktionsbohrungen.

Beim dem wässrigen Flutmedium kann es sich bevorzugt um Wasser bzw. salzhaltiges Wasser handeln. Es handelt sich in diesem Falle das sogenannte "Wasserfluten". Es kann sowohl Süßwasser als auch Salzwasser injiziert werden. Beispielsweise kann Meerwasser zum Injizieren verwendet werden, beispielsweise bei Förderplattformen, oder es kann gefördertes Formationswasser verwendet werden, welches auf diese Art und Weise wieder verwendet wird. Es kann sich um kaltes Wasser oder um heißes Wasser handeln. Es kann sich bei den wässrigen Flutmedien aber auch um Dampf handeln ("Dampffluten") Tenside enthaltende wässrige Formulierungen ("Tensidfluten") oder verdickende Polymere enthaltende Formulierungen ("Polymerfluten").

Sofern der Verfahrensschritt (2) mehrfach ausgeführt wird, kann es sich bei den jeweils eingesetzten wässrigen Flutmedien um gleichartige oder unterschiedlich zusammengesetzte wässrige Flutmedien handeln.

Führt man Schritt (1) durch Injektion in die Injektionsbohrungen aus, so ist es empfehlenswert, das Verfahren mit der Durchführung von Schritt (1) zu beginnen. Anschließend erfolgt Verfahrensschritt (2). Haben sich durch Verfahrenschritt (2) neue bevorzugt Flutwege gebildet, so können diese durch Wiederholung von Schritt (1) blockiert werden, und anschließend kann mit Schritt (2) fortgefahren werden. Selbstverständlich kann man die Abfolge der Schritte (1) und (2) auch mehrfach wiederholen.

Das Blockieren permeabler Bereiche von der Produktionsbohrung aus, kann man vorteilhaft durchführen, wenn die Wasserproduktion gestiegen ist, also im Anschluss an ein erstes Durchführen von Verfahrensschritt (2). Nach der Durchführung von Verfahrensschritt (1) wird die Erdölproduktion mit der erneuten Durchführung von Verfahrensschritt (2) wiederholt.

Die folgenden Beispiele sollen die Erfindung näher illustrieren:

### Herstellung des verwendeten Monomers

### Hydroxybutylvinyletheralkoxylat mit 22 EO-Einheiten und 12 PeO-Einheiten

H₂C=CH-O-(CH₂)₄-O-(-CH₂-CH₂-O-)₂₂-(-CH₂-CH(C₃H₇)-O-)₁₂-H

In einem 1 I Rührautoklaven aus Edelstahl werden 44,1 g Hydroxybutylvinylether vorgelegt. Anschließend werden 3,12 g KOMe (32 %ig in MeOH) dosiert und das Methanol bei 80 °C und ca. 30 mbar abgezogen. Anschließend wird auf 140 °C aufgeheizt, der Reaktor mit Stickstoff gespült und ein Stickstoff-Vordruck von 1,0 bar eingestellt. Anschließend werden 368 g EO innerhalb von ca. 3 h dosiert. Nach einer halbstündigen Nachreaktion bei 140 °C wird der Reaktor auf 125 °C abgekühlt und es werden innerhalb von 3,5 h insgesamt 392 g Pentenoxid eindosiert. Die Nachreaktion läuft über Nacht.

Das Produkt hat eine OH-Zahl von 31,9 mg KOH/g (Theorie: 26,5 mg KOH/g). Die OH-Zahl wird mittels der ESA-Methode ermittelt.

### Herstellung von Polymer 1 (erfindungsgemäß):

### Herstellung eines Copolymers aus 2 Gew. % Monomer M1, 50 Gew. % Acrylamid und 48 Gew. % 2-Acrylamido-2-methylpropansulfonsäure (mittels Gelpolymerisation)

In einem Plastikeimer mit Magnetrührer, pH-Meter und Thermometer werden 121,2 g einer 50 %-igen wässrigen Lösung von NaATBS (2-Acrylamido-2-methylpropansulfonsäure, Na-Salz) vorgelegt und anschließend nacheinander 155 g destilliertes Wasser, 0,6 g eines Entschäumers (Surfynol^{®} DF-58), 0,2 g eines Silikonentschäumers (Baysilon^{®} EN), 2,3 g Monomer M1, 114,4 g einer 50 %-igen wässrigen Lösung von Acrylamid, 1,2 g Pentanatriumdiethylentriaminpentaacetat (Komplexbildner, als 5%-ige wässrige Lösung) und 2,4 g eines nichtionischen Tensids (Nonylphenol, alkoxyliert mit 10 Einheiten Ethylenoxid) zugegeben.

Nach Einstellen des pH-Wertes mit einer 20%-igen bzw. 2%-igen Schwefelsäure-Lösung auf einen Wert von 6 und Zugabe des restlichen Wassers wird die Monomerlösung auf die Starttemperatur von 5°C eingestellt. Die Gesamtmenge des Wassers wird so bemessen, dass -nach der Polymerisation- eine Feststoffkonzentration von ca. 30 bis 36 Gew. % erreicht wird. Die Lösung wird in eine Thermoskanne umgefüllt, ein Thermofühler für die Temperaturaufzeichnung angebracht und 30 Minuten mit Stickstoff gespült. Die Polymerisation wird anschließend durch Zugabe von 1,6 ml einer 10%-igen wässrigen Lösung eines wasserlöslichen, kationischen A-zoinitiators 2,2'-Azo-bis-(2-amidinopropan)-dihydrochlorid (Wako V-50), 0,12 ml einer 1 %-igen wässrigen Lösung *tert*.-Butylhydroperoxid sowie 0,24 ml einer 1%igen Natriumsulfit-Lösung gestartet. Nach Zugabe der Initiatoren steigt die Temperatur innerhalb von 15 bis 30 min auf ca. 80°C. Nach 30 min wird das Reaktionsgefäß zur Vervollständigung der Polymerisation für ca. 2 h in einen Trockenschrank von ca. 80°C gestellt. Die Gesamtdauer der Polymerisation beträgt ca. 2 h bis 2,5 h.

Es wird ein Gel-Block erhalten, der nach Beendigung der Polymerisation mit Hilfe eines Fleischwolfs zerkleinert wird. Das erhaltene Gel-Granulat wird in einem Wirbelschichttrockner bei 55 °C für zwei Stunden getrocknet. Man erhält dabei ein weißes, hartes Granulat, welches mittels Zentrifugalmühle in einen pulverförmigen Zustand übergeführt wird. Man erhält ein Copolymer mit einem gewichtsmittleren Molekulargewicht von ca. 1*10⁶ g/mol bis 30*10⁶ g/mol.

### Vergleichspolymer 1:

Hierbei handelt es sich um ein kommerziell erhältliches Copolymer zum Polymerfluten aus ca. 50 Gew. % Acrylamid und ca. 50 Gew. % 2-Acrylamido-2-methylpropansulfonsäure mit einem gewichtsmittleren Molekulargewicht M_{w} von ca. 8 bis 13*10⁶ g/mol. Im Unterschied zu den erfindungsgemäß verwendeten Copolymeren weist es keine hydrophob assoziierenden Monomere auf.

### Herstellung von Polymer 2 (erfindungsgemäß):

### Herstellung eines Copolymers aus 2 Gew. % Monomer 1, 93 Gew. % Acrylamid und 5 Gew. % Acrylsäure-t-butylester

In einem 2 l-Dreihalskolben mit Rührer und Thermometer wurden 337,5 g Wasser vorgelegt. Nacheinander wurden 0,06 g Natriumhypophosphit, 0,5 g Ammoniumpersulfat und 7,46 g Butylacrylat in den Reaktinoskolben zugegeben. Nun wurde 45 min mit Stickstoff gespült.
Parallel dazu wurde eine Monomerlösung bestehend aus 91,2 g Wasser, 272,56 g 50 proz. wässriger Acrylamidlösung, 1,03 g 50 proz. wässriger Trilon C Lösung, 2,93 g Monomer M1, 1,03 g Natriumdodecylsulfat, 0,1 g Natriumhypophosphit und 0,5 g Kaliumbromat hergestellt. Ebenso wurden 24,0 g einer 7 proz. wässrigen Natriumsulfitlösung als Initiatorlösung hergestellt. Nach dem Inertisieren wurden die Monomerlösung und die Initiatorlösung parallel mit einer Schlauchpumpe dosiert. Die Dosierzeit der Monomerlösung betrug 2 h, die der Initiatorlösung 2,5 h. Dabei wurde darauf geachtet, dass die Innentemperatur 50 °C nicht überstieg. Nach Ende der Dosierung wurde auf 60 °C aufgeheizt. Anschließend wurden 0,375 g VA044 als weiterer Initiator zur Restmonomerreduzierung zugesetzt und der Ansatz wurde 1 h bei 60 °C gerührt. Zum Abschluss wurden 0,75 g Acticide MBS in 13,5 g Wasser gelöst und zugegeben. Dann wurde der Ansatz abgekühlt und abgefüllt.

### Herstellung von Polymer 3 (erfindungsgemäß):

### Herstellung eines Copolymers aus 4 Gew. % Monomer 1, 91 Gew. % Acrylamid und 5 Gew. % Acrylsäure-t-butylester

Polymer 3 wurde hergestellt wie Polymer 2, nur wurden die Mengen der Monomere wie folgt geändert:

| | |
|---|---|
| 50 proz. wässrige Acrylamidlösung | 266,71 g |
| Butylacrylat | 7,46 g |
| Monomer 1 | 5,85 g |

### Herstellung von Polymer 4 (erfindungsgemäß):

### Herstellung eines Copolymers aus 1 Gew. % Monomer 1, 94 Gew. % Acrylamid und 5 Gew. % Acrylsäure-t-butylester

Polymer 4 wurde hergestellt wie Polymer 2, nur wurden die Mengen der Monomere wie folgt geändert:

| | |
|---|---|
| 50 proz. wässrige Acrylamidlösung | 275,51 g |
| Butylacrylat | 7,46 g |
| Monomer 1 | 1,46 g |

### Herstellung von Polymer 5 (erfindungsgemäß)

### Herstellung eines Copolymers aus 0,5 Gew. % Monomer 1, 94,5 Gew. % Acrylamid und 5 Gew. % Acrylsäure-t-butylester

Polymer 5 wurde hergestellt wie Polymer 2, nur wurden die Mengen der Monomere wie folgt geändert:

### Beispielpolymer 4:

| | |
|---|---|
| 50 proz. wässrige Acrylamidlösung | 276,99 g |
| Butylacrylat | 7,46 g |
| Monomer 1 | 0,73 g |

### Herstellung von Polymer 6 (erfindungsgemäß):

### Herstellung eines Copolymers aus 0,5 Gew. % Monomer 1, 95,5 Gew. % Acrylamid und 4 Gew. % Natriumacrylat (mittels Suspensionspolymerisation)

In einem 2L-Doppelwandreaktor mit Rührer und Wasserabscheider werden 600 g Exxsol D40 vorgelegt, mit 4 g einer 25 proz. Lösung eines polymeren Stabilisierers für Wasser-in-ÖI-Suspensionen versetzt und auf 35 °C temperiert. Dabei wird 90 min durch Stickstoffspülen inertisiert. In einem Becherglas werden 310,40 g einer 50 proz. wässrigen Acrylamidlösung, 18,05 einer 35 proz. Natriumacrylat-Lösung, 0,6 g 50 proz. wässrigesTrilon C 0,81 g von Monomer 1 und 10,12 g Wasser gemischt. Mit 10 proz. Schwefelsäure wird der pH auf 6,0 eingestellt.Nun werden 1,62 einer 10 proz. wässrigen Lösung von V50 (Wako) und 11,52 g einer 1 proz. Natriumsulfitlösung in die Monomerlösung gegeben. Die Monomerlösung wird in die inertisierte Öl-phase gegeben und für 4 min. bei 350 Upm gerührt. Danach werden 3,6 g einer 1 proz. wässrigen Lösung von tert. Butylhydroperoxid zugegeben. Die Polymerisation springt schnell an und erreicht nach wenigen Minuten 85 °C. Nach 15 min wird zum Sieden aufgeheizt und das Wasser wird azeotrop abdestilliert. Nach dem vollständigen Entfernen des Wassers wird auf Raumtemperatur abgekühlt und abfiltriert.

### Herstellung von Polymer 7 (erfindungsgemäß):

### Herstellung eines Copolymers aus 1 Gew. % Monomer 1, 95 Gew. % Acrylamid und 4 Gew. % Natriumacrylat

Polymer 7 wurde hergestellt wie Polymer 6, nur wurden die Mengen der Monomere wie folgt geändert:

| | |
|---|---|
| 50 proz. wässrige Acrylamidlösung | 308,70 g |
| 35 proz. wässrige Natriumacrylatlösung | 18,05 g |
| Monomer 1 | 1,62 g |

### Herstellung von Polymer 8 (erfindungsgemäß):

### Herstellung eines Copolymers aus 2 Gew. % Monomer 1, 94 Gew. % Acrylamid und 4 Gew. % Natriumacrylat

Polymer 8 wurde hergestellt wie Polymer 6, nur wurden die Mengen der Monomere wie folgt geändert:

| | |
|---|---|
| 50 proz. wässrige Acrylamidlösung | 305,50 g |
| 35 proz. wässrige Natriumacrylatlösung | 18,05 g |
| Monomer 1 | 3,24 g |

### Herstellung von Polymer 9 (erfindungsgemäß):

### Herstellung eines Copolymers aus 4 Gew. % Monomer 1, 92 Gew. % Acrylamid und 4 Gew. % Natriumacrylat

Polymer 9 wurde hergestellt wie Polymer 26nur wurden die Mengen der Monomere wie folgt geändert:

| | |
|---|---|
| 50 proz. wässrige Acrylamidlösung | 299,06 g |
| 35 proz. wässrige Natriumacrylatlösung | 18,05 g |
| Monomer 1 | 6,48 g |

### Herstellung von Vergleichspolymer 2:

### Herstellung eines Copolymers aus 0,5 Gew. % Acrylsäure, 39,5 Gew. % Acrylamid und 60 Gew. % 2-Acrylamido-2-methylpropansulfonsäure

Polymer V2 wurde hergestellt wie Polymer 6 (Suspensionspolymerisation), nur wurden die oben genannten Monomere in den genannten Mengen eingesetzt.

### Herstellung von Polymer 10 (erfindungsgemäß)

### Herstellung eines Copolymers aus 3,1 Gew. % Natriumacrylat, 96,4 Gew. % Acrylamid und 0,5 Gew. % Monomer 1

Es wurde wie in Beispiel 1 vorgegangen (Gelpolymerisation), nur wurden die oben genannten Monomere in den genannten Mengen eingesetzt.

### Herstellung von Polymer 11 (erfindungsgemäß)

### Herstellung eines Copolymers aus 3,1 Gew. % Natriumacrylat, 95,9 Gew. % Acrylamid und 1,0 Gew. % Monomer 1

Es wurde wie in Beispiel 1 vorgegangen (Gelpolymerisation), nur wurden die oben genannten Monomere in den genannten Mengen eingesetzt.

### Herstellung von Polymer 12 (erfindungsgemäß)

### Herstellung eines Copolymers aus 3,1 Gew. % Natriumacrylat, 94,9 Gew. % Acrylamid und 2,0 Gew. % Monomer 1

Es wurde wie in Beispiel 1 vorgegangen (Gelpolymerisation), nur wurden die oben genannten Monomere in den genannten Mengen eingesetzt.

### Herstellung von Polymer 13 (erfindungsgemäß)

### Herstellung eines Copolymers aus 3,1 Gew. % Natriumacrylat, 92,8 Gew. % Acrylamid und 4,1 Gew. % Monomer 1

Es wurde wie in Beispiel 1 vorgegangen (Gelpolymerisation), nur wurden die oben genannten Monomere in den genannten Mengen eingesetzt.

### Herstellung von Vergleichspolymer 3:

### Herstellung eines Copolymers aus 3,1 Gew. % Natriumacrylat, 96,9 Gew. % Acrylamid

Es wurde wie in Beispiel 1 vorgegangen (Gelpolymerisation), nur wurden die oben genannten Monomere in den genannten Mengen eingesetzt. Es wurde kein Monomer 1 verwendet.

### Anwendungstechnische Untersuchungen der Polymere 1, 10 bis 13 und V1, V2, V3:

In den folgenden Versuchsreihen wird die thermoverdickende Wirkung der verwendeten Polymere getestet:

### Versuchsreihe 1:

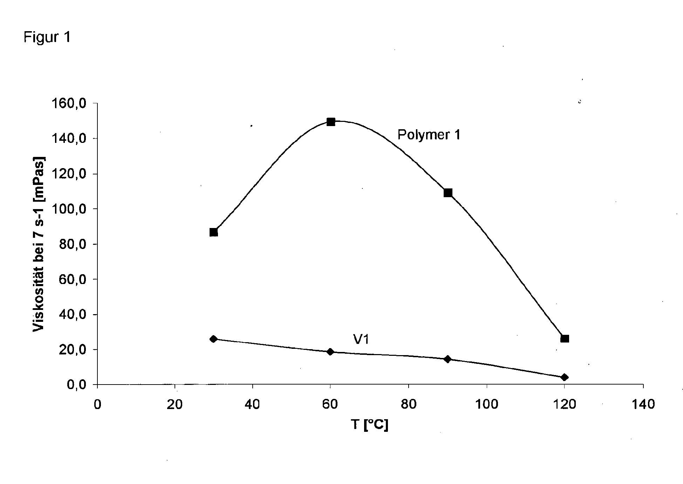

Es wurden Lösungen der Polymere 1 sowie V1 in einer Konzentration von jeweils 1200 ppm in Leitungswasser angesetzt und es wurde jeweils die Viskosität der Lösungen bei 30°C, 60°C, 90°C und 120°C gemessen. Abbildung 1 zeigt das Ergebnis der Viskositätsmessungen.

Es ist deutlich zu erkennen, dass die Viskosität des erfindungsgemäß verwendeten Polymers mit steigender Temperatur bis zu einem Viskositätsmaximum bei 60°C ansteigt und danach wieder abnimmt, während das Vergleichspolymer mit steigender Temperatur eine sinkende Viskosität aufweist. Das erfindungsgemäß verwendete Polymer kann somit niedrigen Temperaturen in die Erdölformation injiziert werden, und folgt den bevorzugten Fließwegen. Die Viskosität erhöht sich beim Erwärmen unter dem Einfluss der Lagerstättentemperatur von ganz alleine und führt somit zur Bildung eines hochviskosen Gels in den Fließwegen.

### Versuchsreihe 2:

Es wurde eine 2%ige Lösung des erfindungsgemäßen Polymers 1 in Leitungswasser hergestellt. Diese Lösung war bei Raumtemperatur hochviskos, aber noch fließfähig, insbesondere bei höheren Scherraten, wie sie beim Verpumpen der Polymerlösung auftreten. Bei Erwärmung auf 60°C und einer niedrigen Scherrate stieg die Viskosität der Polymerlösung deutlich an und war kaum mehr fließfähig.

### Versuchsreihe 3:

Es wurde die Brookfield-Viskosität (in mPas)von Lösungen von 0,5 Gew.-% der Polymere 10 bis 13 sowie V2 und V3 in Frischwasser sowie in einer Salzlösung bei verschiedenen Temperaturen gemessen.
Die Salzlösung hatte die folgende Zusammensetzung:

| **Salz** | **Menge [g/l]** |
|---|---|
| NaCl | 23,5 |
| Na₂SO₄*10 H₂O | 8,9 |
| KCl | 0,7 |
| MgCl₂*6 H₂O | 10,6 |
| CaCl₂*2 H₂O | 2,2 |
| NaHCO₃ | 0,2 |
| Summe | 46,1 |

Die Ergebnisse sind in Tabellen 1 und 2 zusammengefasst:

**Tabelle 1: Ergebnisse der Viskositätsmessungen in Frischwasser**

| T [°C] | Viskosität η [m Pas] | | | | | |
|---|---|---|---|---|---|---|
| | Polymer 10 | Polymer 11 | Polymer 12 | Polymer 13 | V2 | V3 |
| | 0,5 % M1 | 1% M1 | 2%M1 | 4,1 % M1 | - | - |
| 20 | 78 | 150 | 252 | 280 | 500 | 45 |
| 40 | 75 | 345 | 700 | 800 | 350 | 65 |
| 60 | 40 | 550 | 1860 | 1700 | 250 | 90 |
| 80 | | | 2750 | | | |

**Tabelle 2: Ergebnisse der Viskositätsmessungen in Salzwasser**

| T [°C] | Viskosität η [m Pas] | | | | | |
|---|---|---|---|---|---|---|
| | Polymer 10 | Polymer 11 | Polymer 12 | Polymer 13 | V2 | V3 |
| | 0,5 % M1 | 1% M1 | 2%M1 | 4,1 % M1 | - | - |
| 20 | 120 | 170 | 390 | 155 | 40 | 85 |
| 40 | 180 | 470 | 1700 | 550 | 20 | 45 |
| 60 | 250 | 1000 | 2500 | 1000 | 15 | 30 |
| 80 | | | 3300 | | | |

Die Ergebnisse zeigen, dass die erfindungsgemäß zu verwendenden Polymere, welche das Monomer M1 enthalten, in Salzwasser ein hervorragendes thermoverdickendes Verhalten zeigen. Die Vergleichspolymere V2 und V3 weisen in Salzwasser nur sehr geringe Viskositäten auf, und die Viskositäten nehmen beim Erwärmen ab. Aufgrund dieser Eigenschaften eignen sich die Polymere hervorragend zum Blockieren unterirdischer Formationen. Die Polymere lassen sich bei geringen Viskositäten gut injizieren und die Viskosität nimmt unter Tage sehr stark zu.

### Anwendungstechnische Untersuchungen der Polymere 2 bis 9:

### Messung der Brookfield-Viskosität

Von den eingesetzten Polymeren wurde jeweils die Brookfield-Viskosität in wässriger Lösung bei Raumtemperatur gemessen. Die Ergebnisse sind in den nachfolgenden Tabellen 3 und 4 zusammengefasst.

**Tabelle 3: Viskositäten der Polymere 3 bis 5**

| Polymer Nr. | Zusammensetzung Acrylamid /tert.-Butylacrylat/Monomer M1 | Brookfield Viskosität [mPas] bei RT |
|---|---|---|
| | [in Gew. %] | (Wässrige Lösung, 20 Gew.-%) |
| 2 | 93/5/2 | 208 |
| 3 | 91/5/4 | 440 |
| 4 | 94/5/1 | 260 |
| 5 | 94,5/5/0,5 | 260 |

**Tabelle 4: Viskositäten der Polymere 6 bis 9**

| Polymer Nr. | Zusammensetzung Acrylamid/Natriumacrylat/Monomer M1 [in Gew. %] | Brookfield Viskosität [mPas] in Wasser bei RT | |
|---|---|---|---|
| | | 0,5 Gew. % Polymer | 1 Gew. % Polymer |
| 6 | 95,5/4/0,5 | 8 | 28 |
| 7 | 95/4/1 | 90 | 150 |
| 8 | 94/4/2 | 90 | 190 |
| 9 | 92/4/4 | 210 | 320 |

### Herstellung von Polymergelen

Um die Eigenschaften der verwendeten Polymere im Hinblick auf Gelbildungseigenschaften unter Formationsbedingungen testen zu können, wurde die Gelbildung in Meerwasser bei 80°C untersucht. Die Kombination von 80°C sowie salzhaltigem Wasser simuliert die Bedingungen in einer typischen Erdölagerstätte.

Die t-Butylestereinheiten der Copolymere 2 bis 5 hydrolysieren bei 80°C in Meerwasser innerhalb von 2h zu ca. 50% und bilden COOH-Gruppen.

Es wurde ein synthetisches Meerwasser der folgenden Zusammensetzung eingesetzt:
500 g deionisiertes Wasser
1,13 g NaHCO3
13,60 g CaCl2 X 6 H2O
28,34 g MgCl2 x 6 H2O
39,70 g MgSO4 x 6 H2O
158,72 g NaCl

Weiterhin wurde bei einigen Versuchen Vernetzer zugegeben. Als Vernetzer eingesetzt wurden:

| | |
|---|---|
| Vernetzer 1: | 50 Gew. % ige wässrige Chrom(III)acetatlösung |
| Vernetzer 2: | 33 Gew. % ige wässrige Polyethyleniminlösung, M_{w} ca. 75000 g/mol, pH 11,4 (Lupasol® PS) |
| Vernetzer 3: | 40 Gew. % ige wässrige Polyethyleniminlösung, M_{w} ca. 25000 g/mol, pH 11,0 (Basomin® G 500) |

Die Versuche zur Gelbildung wurden wie folgt durchgeführt.
- 100 ml einer 5%igen Lösung der Polymere in Meerwasser (bzw. in Frischwasser zu Vergleichszwecken) werden in einem Schraubglas vorgelegt. Sofern Vernetzer verwendet wird, wird der Vernetzer wird mittels einer Plastik-Spritze zugegeben und das Schraubglas geschlossen. Das Glas wird geschüttelt, bis die Mischung homogen ist und anschließend bei 80°C in den Trockenschrank gestellt.
- Die Probe wird in 5 Minuten-Intervallen optisch beurteilt, indem man das Glas auf den Kopf stellt und das Fließverhalten des Inhalts beurteilt und einem Gel-Code zugeordnet. Der Zeitpunkt sobald der Gel Code B erreicht wird, wird notiert. Das Aussehen der Gele und die Zuordnung der Gel-Codes ist nachfolgend aufgeführt.

### Gel-Codes

A - Kein feststellbares Gel formte sich. Das Gel scheint dieselbe Viskosität (Flüssigkeit) wie die ursprüngliche Polymer-Lösung zu haben, und es kann kein Gel visuell entdeckt werden.
B - Hoch fließendes Gel. Das Gel scheint nur ein bisschen klebriger zu sein, als die ursprüngliche, relativ niedrigviskose Polymer-Lösung.
C - Fließendes Gel. Der größte Teil des offensichtlich feststellbaren Gels fließt in den Flaschenverschluss und zurück.
D - Gemäßigt fließendes Gel. Eine kleine Menge (∼5-15 %) des Gels fließt in den Flaschenverschluss und zurück - gewöhnlich charakterisiert als ein 'tonguing' Gel (d. h. nachdem das Gel aus der Flasche hängt, kann es wieder zurück in die Flasche fließen, wenn die Flasche langsam aufrecht gedreht wird).
E - Kaum fließendes Gel. Das Gel fließt langsam in den Flaschenverschluss und/oder ein bedeutender Teil (> 15 %) des Gels fließt nicht in den Flaschenverschluss und zurück.
F - Hoch verformbares Gel. Das Gel fließt nicht in den Flaschenverschluss und zurück (Gel fließt nur knapp zum Erreichen des Flaschenverschlusses).
G - Gemäßigt verformbar nicht fließendes Gel. Das Gel fließt zur Hälfte zum Flaschenverschluss und zurück.
H - Ein nur noch gering verformbares, nicht fließendes Gel. Die Gel-Oberfläche deformiert sich etwas und die Deformation bildet sich wieder zurück.
I - Starres Gel. Es gibt keine Gel-Oberflächendeformierung mehr.
J - Das Klingeln starren Gels. Nachdem an die Flasche geklopft wird, klingelt das Gel wie eine Stimmgabel und ein mechanisches Vibrieren kann gefühlt werden,

Die Ergebnisse und Versuchsbedingungen der Polymere 2 bis 5 sind in der nachfolgenden Tabelle 5 dargestellt, die Ergebnisse der Polymere 6 bis 9 in der nachfolgenden Tabelle 6.

**Tabelle 5: Gelbildungsversuche bei 80°C, Versuchsbedingungen und Ergebnisse**

| Polymer Nr. | Polymermenge [Gew. %] | Medium | Vernetzer | Gelcode B nach [min] | Gelcode J nach [min] |
|---|---|---|---|---|---|
| 2 | 5 | Frischwasser | Vernetzer 1 / 250 ppm | 45 | 55 |
| 3 | 5 | Frischwasser | Vernetzer 1/ 250 ppm | 60 | 70 |
| 4 | 5 | Frischwasser | Vernetzer 1 / 250 ppm | 55 | 65 |
| 5 | 5 | Frischwasser | Vernetzer 1 / 250 ppm | 55 | 70 |
| | | | | | |
| 2 | 5 | Meerwasser | Vernetzer 1/250 ppm | 50 | 60 |
| 3 | 5 | Meerwasser | Vernetzer 1/250 ppm | 65 | 70 |
| 4 | 5 | Meerwasser | Vernetzer 1 / 250 ppm | 55 | 70 |
| 5 | 5 | Meerwasser | Vernetzer 1 / 250 ppm | 50 | 75 |
| | | | | | |
| 2 | 5 | Frischwasser | Vernetzer 2 / 2000 ppm | 3 h 10 min | 3 h 30 min |
| 3 | 5 | Frischwasser | Vernetzer 2 / 2000 ppm | 3 h 30 min | 3 h 45 min |
| 4 | 5 | Frischwasser | Vernetzer 2 / 2000 ppm | 3 h 20 min | 3 h 35 min |
| 5 | 5 | Frischwasser | Vernetzer 2 / 2000 ppm | 2 h 55 min | 3 h 05 min |
| | | | | | |
| 2 | 5 | Frischwasser | Vernetzer 3 / 2000 ppm | 10 h 50 min | 13 h 10 min |
| 3 | 5 | Frischwasser | Vernetzer 3 / 2000 ppm | 12 h 15 min | 14 h 45 min |
| 4 | 5 | Frischwasser | Vernetzer 3 / 2000 ppm | 11 h 35 min | 12 h 55 min |
| 5 | 5 | Frischwasser | Vernetzer 3 / 2000 ppm | 10 h 25 min | 11 h 15 min |
| | | | | | |
| 2 | 5 | Meerwasser | Vernetzer 2 / 2000 ppm | 14 h | 36 h |
| 3 | 5 | Meerwasser | Vernetzer 2 / 2000 ppm | 13h | 38 h |
| 4 | 5 | Meerwasser | Vernetzer 2 / 2000 ppm | 12,5 h | 35 h |
| 5 | 5 | Meerwasser | Vernetzer 2 / 2000 ppm | 9,5 h | 33 h |
| | | | | | |
| 2 | 5 | Meerwasser | Vernetzer 3 / 2000 ppm | 12h | 33 h |
| 2 | 5 | Meerwasser | Vernetzer 3 / 2000 ppm | 14 h | 35 h |
| 3 | 5 | Meerwasser | Vernetzer 3 / 2000 ppm | 12h | 30 h |
| 5 | 5 | Meerwasser | Vernetzer 3 / 2000 ppm | 7h | 28 h |

**Tabelle 6: Gelbildungsversuche bei 80°C, Versuchsbedingungen und Ergebnisse, der Vernetzer wurde jeweils in einer Menge von 250 ppm eingesetzt.**

| Polymer Nr. | Polymermenge [Gew. %] | Medium | Zeit bis zum Erreichen von Gel-Code B [min] | Endfestigkeit | |
|---|---|---|---|---|---|
| | | | | Erreicht nach [min] | Erreichter Gel-Code |
| 6 | 3 | Meerwasser | 15 | 30 | J |
| 7 | 3 | Meerwasser | 15 | 30 | J |
| 8 | 2 | Meerwasser | 15 | 30 | I |
| 9 | 2 | Meerwasser | 15 | 30 | I |

## Patentansprüche

1. Verfahren zur Förderung von Erdöl aus unterirdischen Erdöllagerstätten inhomogener Permeabilität umfassend mindestens die folgenden Verfahrenschritte:
(1) Blockieren permeabler Bereiche der unterirdischen Erdöllagerstätte durch Injizieren einer wässrigen Formulierung in die Formation durch mindestens eine Bohrung, wobei die wässrige Formulierung mindestens ein wasserlösliches, hydrophob assoziierendes Copolymer umfasst, sowie
(2) Injizieren eines wässrigen Flutmediums in mindestens eine Injektionsbohrung und Entnahme von Erdöl durch die mindestens eine Produktionsbohrung,
**dadurch gekennzeichnet, dass**
• das wasserlösliche, hydrophob assoziierende Copolymer
(a) 0,1 bis 15 Gew.-% mindestens eines monoethylenisch ungesättigten, hydrophob assoziierenden Monomers (a) ausgewählt aus der Gruppe von
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
umfasst, wobei die Einheiten -(-CH₂-CH(R³)-O-)ₖ und -(-CH₂-CH(R⁴)-O-)ₗ in Blockstruktur in der in Formel (I) dargestellten Reihenfolge angeordnet sind und die Reste und Indices die folgende Bedeutung haben:
k: eine Zahl von 10 bis 150,
l: eine Zahl von 5 bis 25,
R¹: H oder Methyl,
R²: eine Einfachbindung oder eine zweiwertige, verknüpfende Gruppe, ausgewählt aus der Gruppe von -(CₙH₂ₙ)- [R^{2a}], -O-(C_{n'}H_{2n'})- [R^{2b}] und - C(O)-O-(C_{n"}H_{2n"})- [R^{2c}], wobei n, n' und n" jeweils für eine natürliche Zahl von 1 bis 6 stehen,
R³: unabhängig voneinander H, Methyl oder Ethyl, mit der Maßgabe, dass es sich bei mindestens 50 mol % der Reste R³ um H handelt,
R⁴: unabhängig voneinander ein Kohlenwasserstoffrest mit mindestens 2 Kohlenstoffatomen oder eine Ethergruppe der allgemeinen Formel -CH₂-O-R^{4'}, wobei R^{4'} für einen Kohlenwasserstoffrest mit mindestens 2 Kohlenstoffatomen steht,
R⁵: H oder ein Kohlenwasserstoffrest mit 1 bis 30 C-Atomen,
R⁶: ein aliphatischer und/oder aromatischer, geradkettiger oder verzweigter Kohlenwasserstoffrest mit 8 bis 40 Kohlenstoffatomen,
sowie weiterhin
(b) 85 bis 99,9 Gew. % mindestens zweier, davon verschiedener, monoethylenisch ungesättigter Monomere (b) umfasst, wobei es sich bei den Monomeren (b) um
(b1) mindestens ein neutrales, monoethylenisch ungesättigtes, hydrophiles Monomer (b1), ausgewählt aus der Gruppe von (Meth)acrylamid, N-Methyl(meth)acrylamid, N,N'-Dimethyl(meth)acrylamid oder N-Methylol(meth)acrylamid, sowie um
(b2) mindestens ein Monomer (b2a) und/oder (b2b), wobei die Monomere (b2a) und (b2b) wie folgt definiert sind:
(b2a) anionische, monoethylenisch ungesättigte, hydrophile Monomere, welche mindestens eine saure Gruppe ausgewählt aus der Gruppe von -COOH, -SO₃H oder -PO₃H₂ aufweisen, bzw. deren Salze,
(b2b) (Meth)acrylsäureester der allgemeinen Formel H₂C=C(R¹⁵)-COOR¹⁶, wobei R¹⁵ für H oder Methyl und R¹⁶ für einen geradkettigen oder verzweigten Alkylrest mit 1 bis 8 C-Atomen stehen, mit der Maßgabe, dass die Menge der Monomere (b2b) -sofern vorhanden- 20 Gew. % nicht überschreitet,
wobei die Mengenangaben jeweils auf die Gesamtmenge aller Monomere im Copo-lymer bezogen sind,
• das Copolymer ein gewichtsmittleres Molekulargewicht M_{w} von 0,5*10⁶ g/mol bis 30*10⁶ g/mol aufweist,
• die Menge des Copolymers in der wässrigen Formulierung 0,1 bis 3 Gew. % beträgt,
• die Lagerstättentemperatur 30°C bis 120°C beträgt,
• und wobei die Formulierung weiterhin wasserlösliche Komponenten umfasst, die eine Vernetzung des Polymers unter Lagerstättenbedingungen bewirken können, und die Temperatur der zu injizierenden wässrigen Copolymer-Formulierung so gewählt wird, dass sie niedriger ist als die Lagerstättentemperatur.

2. Verfahren gemäß Anspruch 1, **dadurch gekennzeichnet, dass** das Copolymer Monomere (b1) sowie (b2a) aber keine Monomere (b2b) umfasst.

3. Verfahren gemäß Anspruch 1, **dadurch gekennzeichnet, dass** das Copolymer Monomere (b1) sowie (b2b) aber keine Monomere (b2a) umfasst.

4. Verfahren gemäß einem der Ansprüche 1 bis 3, **dadurch gekennzeichnet, dass** die Lagerstättentemperatur 40°C bis 100°C beträgt.

5. Verfahren gemäß einem der Ansprüche 1 bis 3, **dadurch gekennzeichnet, dass** die Lagerstättentemperatur 45 bis 90°C beträgt.

6. Verfahren gemäß Anspruch einem der Ansprüche 1 bis 5, **dadurch gekennzeichnet, dass** man die wässrige Formulierung mit einer Scherrate von mindestens 30000 s⁻¹ in die For-mation injiziert.

7. Verfahren gemäß einem der Ansprüche 1 bis 6, **dadurch gekennzeichnet, dass** es sich bei dem hydrophob assoziierenden Monomer (a) um mindestens eines der Formel (I) handelt, und wobei
• R⁴ für einen Kohlenwasserstoffrest mit 3 bis 10 Kohlenstoffatomen,
• k für eine Zahl von 12 bis 100, und
• R⁵ für H, Methyl oder Ethyl steht.

8. Verfahren gemäß Anspruch 7, **dadurch gekennzeichnet, dass** es sich bei
• R⁴ um einen n-Propylrest handelt,
• k für eine Zahl von 15 bis 80, und
• R⁵ für H steht.

9. Verfahren gemäß einem der Ansprüche 1 bis 8, **dadurch gekennzeichnet, dass** es sich bei den vernetzenden Komponenten um mindestens eine wasserlösliche Verbindung ausgewählt aus der Gruppe von
• zwei-, drei- oder vierwertige Metallionen enthaltende Verbindungen,
• mindestens zwei Aminogruppen aufweisende organische Verbindungen,
• Aldehyden
handelt.

10. Verfahren gemäß einem der Ansprüche 1, 2 sowie 4 bis 8, **dadurch gekennzeichnet, dass** das Copolymer weiterhin mindestens ein kationisches, monoethylenisch ungesättigtes, Ammoniumionen aufweisendes Monomer (b3) umfasst.

11. Verfahren gemäß Anspruch 10, **dadurch gekennzeichnet dass** es sich bei dem kationischen Monomer (b3) um Salze von 3-Trimethylammoniumpropyl(meth)acrylamiden, Dialkyldiallylammonium und 2-Trimethylammoniumethyl(meth)acrylaten handelt.

12. Verfahren gemäß Anspruch 10 oder 11, **dadurch gekennzeichnet, dass** die neutralen Monomere (b1) in einer Menge von 30 bis 95 Gew. % und die anionischen Monomere (b2a) und kationischen Monomere (b3) zusammen in einer Menge von 4,9 bis 69,9 Gew. % eingesetzt werden, mit der Maßgabe, dass das molare Verhältnis (b2a) / (b3) 0,7 bis 1,3 beträgt, und wobei die Mengen jeweils auf die Gesamtmenge aller eingesetzten Monomere bezogen ist.

13. Verfahren gemäß einem der Ansprüche 1 sowie 3 bis 9, **dadurch gekennzeichnet, dass** es sich bei dem Alkylrest R¹⁶
• um einen sekundären Alkylrest -CH(R¹⁷)(R^{17'}) handelt, wobei R¹⁷ und R^{17'} für geradkettige oder verzweigte Alkylreste stehen, mit der Maßgabe, dass die Gesamtzahl der Kohlenstoffatome in den Resten R¹⁷ und R^{17'} 2 bis 7 beträgt, und/oder
• um einen tertiären Alkylrest -C(R¹⁸)(R^{18'})(R^{18"}) handelt, wobei R¹⁸, R^{18'}, R^{18"} für geradkettige oder verzweigte Alkylreste stehen, mit der Maßgabe, dass die Gesamtzahl der Kohlenstoffatome in den Resten R¹⁸, R^{18'} und R^{18"} 3 bis 7 beträgt.

14. Verfahren gemäß einem der Ansprüche 1 sowie 3 bis 9, **dadurch gekennzeichnet, dass** es sich bei dem Monomer (b2b) um (Meth)acrylsäure-t-butylester handelt.

15. Verfahren gemäß einem der Ansprüche 1 bis 14, **dadurch gekennzeichnet, dass** man in Verfahrensschritt (1) durch die Injektionsbohrung injiziert und danach Verfahrensschritt (2) ausführt.

16. Verfahren gemäß Anspruch 15, **dadurch gekennzeichnet, dass** es sich bei Verfahrensschritt (2) um Wasserfluten handelt.

17. Verfahren gemäß einem der Ansprüche 1 bis 14, **dadurch gekennzeichnet, dass** zunächst Verfahrensschritt (2) ausführt, nach dem Ansteigen der Wasserproduktion Verfahrensschritt (1) durch Injizieren in die Produktionsbohrung ausführt, und danach die Förderung von Erdöl durch erneute Ausführung von Verfahrenschritt (2) fortsetzt.

## Claims

1. A process for producing mineral oil from underground mineral oil deposits of inhomogeneous permeability, comprising at least the following process steps:
(1) blocking permeable regions of the underground mineral oil deposit by injecting an aqueous formulation into the formation through at least one well, said aqueous formulation comprising at least one water-soluble, hydrophobically associating copolymer, and
(2) injecting an aqueous flooding medium into at least one injection well and withdrawing mineral oil through the at least one production well,
wherein
• the water-soluble, hydrophobically associating copolymer comprises
(a) 0.1 to 15% by weight of at least one monoethylenically unsaturated, hydrophobically associating monomer (a) selected from the group of
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
where the -(-CH₂-CH(R³)-O-)ₖ and -(-CH₂-CH(R⁴)-O-)ₗ units are arranged in block structure in the sequence shown in formula (I) and the radicals and indices are each defined as follows:
k: a number from 10 to 150,
l: a number from 5 to 25,
R¹: H or methyl,
R²: a single bond or a divalent linking group selected from the group of -(CₙH₂ₙ)- [R^{2a}], -O-(C_{n'}H_{2n'})- [R^{2b}] and -C(O)-O-(C_{n''}H_{2n''})- [R^{2c}], where n, n' and n'' are each natural numbers from 1 to 6,
R³: each independently H, methyl or ethyl, with the proviso that at least 50 mol% of the R³ radicals are H,
R⁴: each independently a hydrocarbyl radical having at least 2 carbon atoms or an ether group of the general formula -CH₂-O-R^{4'}, where R^{4'} is a hydrocarbyl radical having at least 2 carbon atoms,
R⁵: H or a hydrocarbyl radical having 1 to 30 carbon atoms,
R⁶: an aliphatic and/or aromatic, straight-chain or branched hydrocarbyl radical having 8 to 40 carbon atoms,
and also
(b) 85 to 99.9% by weight of at least two monoethylenically unsaturated monomers (b) different than (a), where the monomers (b) comprise
(b1) at least one uncharged, monoethylenically unsaturated, hydrophilic monomer (b1), selected from the group of (meth)acrylamide, N-methyl(meth)acrylamide, N,N'-dimethyl(meth)acrylamide or N-methylol(meth)acrylamide, and
(b2) at least one monomer (b2a) and/or (b2b), where the monomers (b2a) and (b2b) are defined as follows:
(b2a) anionic, monoethylenically unsaturated, hydrophilic monomers which have at least one acidic group selected from the group of - COOH, -SO₃H and -PO₃H₂ and salts thereof,
(b2b) (meth)acrylic esters of the general formula H₂C=C(R¹⁵)-COOR¹⁶ where R¹⁵ is H or methyl and R¹⁶ is a straight-chain or branched alkyl radical having 1 to 8 carbon atoms, with the proviso that the amount of the monomers (b2b), if present, does not exceed 20% by weight,
where the amounts are each based on the total amount of all monomers in the copolymer,
• the copolymer has a weight-average molecular weight M_{w} of 0.5*10⁶ g/mol to 30*10⁶ g/mol,
• the amount of the copolymer in the aqueous formulation is 0.1 to 3% by weight,
• the deposit temperature is 30°C to 120°C,
• and where the formulation further comprises water-soluble components which can bring about crosslinking of the polymer under deposit conditions, and the temperature of the aqueous copolymer formulation to be injected is selected such that it is lower than the deposit temperature.

2. The process according to claim 1, wherein the copolymer comprises monomers (b1) and (b2a) but no monomers (b2b).

3. The process according to claim 1, wherein the copolymer comprises monomers (b1) and (b2b) but no monomers (b2a).

4. The process according to any of claims 1 to 3, wherein the deposit temperature is 40°C to 100°C.

5. The process according to any of claims 1 to 3, wherein the deposit temperature is 45°C to 90°C.

6. The process according to any of claims 1 to 5, wherein the aqueous formulation is injected into the formation with a shear rate of at least 30 000 s⁻¹.

7. The process according to any of claims 1 to 6, wherein the hydrophobically associating monomer (a) is at least one of the formula (I), and where
• R⁴ is a hydrocarbyl radical having 3 to 10 carbon atoms,
• k is a number from 12 to 100, and
• R⁵ is H, methyl or ethyl.

8. The process according to claim 7, wherein
• R⁴ is an n-propyl radical,
• k is a number from 15 to 80, and
• R⁵ is H.

9. The process according to any of claims 1 to 8, wherein the crosslinking components comprise at least one water-soluble compound selected from the group of
• compounds comprising di-, tri- or tetravalent metal ions,
• organic compounds having at least two amino groups,
• aldehydes.

10. The process according to any of claims 1, 2 and 4 to 8, wherein the copolymer further comprises at least one cationic, monoethylenically unsaturated monomer (b3) comprising ammonium ions.

11. The process according to claim 10, wherein the cationic monomer (b3) comprises salts of 3-trimethylammoniopropyl(meth)acrylamides, dialkyldiallylammonium and 2-trimethylammonioethyl (meth)acrylates.

12. The process according to claim 10 or 11, wherein the uncharged monomers (b1) are used in an amount of 30 to 95% by weight, and the anionic monomers (b2a) and cationic monomers (b3) together in an amount of 4.9 to 69.9% by weight, with the proviso that the molar (b2a)/(b3) ratio is 0.7 to 1.3, and where the amounts are each based on the total amount of all monomers used.

13. The process according to any of claims 1 and 3 to 9, wherein the alkyl radical R¹⁶
• is a secondary alkyl radical -CH(R¹⁷)(R¹⁷') where R¹⁷ and R^{17'} are straight-chain or branched alkyl radicals, with the proviso that the total number of carbon atoms in the R¹⁷ and R^{17'} radicals is 2 to 7, and/or
• is a tertiary alkyl radical -C(R¹⁸)(R^{18'})(R^{18''}) where R¹⁸, R^{18'}, R¹⁸'' are straight-chain or branched alkyl radicals, with the proviso that the total number of carbon atoms in the R¹⁸, R^{18'} and R^{18''} radicals is 3 to 7.

14. The process according to any of claims 1 and 3 to 9, wherein monomer (b2b) is t-butyl (meth)acrylate.

15. The process according to any of claims 1 to 14, wherein process step (1) involves injection through the injection well and then process step (2) is executed.

16. The process according to claim 15, wherein process step (2) involves water flooding.

17. The process according to any of claims 1 to 14, wherein process step (2) is executed first, after water production rises process step (1) is executed by injection into the production well, and then the production of mineral oil continues by renewed execution of process step (2).

## Revendications

1. Procédé pour l'extraction de pétrole de gisements de pétrole souterrains de perméabilité inhomogène comprenant au moins les étapes de procédé suivantes :
(1) blocage de zones perméables du gisement de pétrole souterrain par injection d'une formulation aqueuse dans la formation via au moins un trou de forage, la formulation aqueuse comprenant au moins un copolymère soluble dans l'eau, s'associant de manière hydrophobe, ainsi que
(2) injection d'un agent d'inondation aqueux dans au moins un trou d'injection et prélèvement de pétrole via au moins un trou de production,
**caractérisé en ce que**
- le copolymère soluble dans l'eau, s'associant de manière hydrophobe comprend
(a) 0,1 à 15% en poids d'au moins un monomère (a) éthyléniquement monoinsaturé, s'associant de manière hydrophobe, choisi dans le groupe formé par
H₂C=C(R¹)-R²-O-(-CH₂-CH(R³)-O-)ₖ-(-CH₂-CH(R⁴)-O-)ₗ-R⁵ (I),
H₂C=C(R¹)-O-(-CH₂-CH(R³)-O-)ₖ-R⁶ (II),
H₂C=C(R¹)-(C=O)-O-(-CH₂-CH(R³)-O-)ₖ-R⁶ (III),
les unités - (-CH₂-CH(R³)-O-)ₖ et -(-CH₂-CH(R⁴)-O-)ₗ dans la structure à blocs étant disposées dans l'ordre représenté dans la formule (I) et les radicaux et indices présentant la signification suivante :
k : un nombre de 10 à 150,
l : un nombre de 5 à 25,
R¹ : H ou méthyle,
R² : une simple liaison ou un groupe de liaison divalent, choisi dans le groupe formé par -(CₙH₂ₙ)- [R^{2a}], -O-(C_{n'}H_{2n'})-[R^{2b}] et -C(O)-O-(C_{n"}H_{2n"})- [R^{2c}], où n, n' et n" représentent chacun un nombre naturel de 1 à 6,
R³ : indépendamment l'un de l'autre, H, méthyle ou éthyle, à condition qu'il s'agisse, pour au moins 50% en mole des radicaux R³, de H,
R⁴ : indépendamment l'un de l'autre, un radical hydrocarboné comprenant au moins 2 atomes de carbone ou un groupe éther de formule générale -CH₂-O-R^{4'}, où R^{4'} représente un radical hydrocarboné comprenant au moins 2 atomes de carbone,
R⁵ : H ou un radical hydrocarboné comprenant 1 à 30 atomes de carbone,
R⁶ : un radical hydrocarboné aliphatique et/ou aromatique, linéaire ou ramifié
comprenant 8 à 40 atomes de carbone, ainsi qu'en outre
(b) 85 à 99,9% en poids d'au moins deux monomères éthyléniquement monoinsaturés (b) différents de celui-ci, où il s'agit, pour les monomères (b), de
(b1) au moins un monomère neutre, éthyléniquement monoinsaturé, hydrophile (b1), choisi dans le groupe formé par le (méth)acrylamide, le N-méthyl(méth)acrylamide, le N,N'-diméthyl(méth)acrylamide ou le N-méthylol(méth)acrylamide, ainsi que de
(b2) au moins un monomère (b2a) et/ou (b2b), les monomères (b2a) et (b2b) étant définis comme suit :
(b2a)des monomères anioniques, éthyléniquement monoinsaturés, hydrophiles, qui présentent au moins un groupe acide choisi dans le groupe formé par -COOH, -SO₃H ou -PO₃H₂, ou leurs sels,
(b2b)des esters de l'acide (méth)acrylique de formule générale H₂C=C(R¹⁵)-COOR¹⁶, R¹⁵ représentant H ou méthyle et R¹⁶ représentant un radical alkyle linéaire ou ramifié comprenant 1 à 8 atomes de carbone, à condition que la quantité de monomères (b2b) - pour autant qu'ils soient présents - ne dépasse pas 20% en poids,
les indications de quantités se rapportant à chaque fois à la quantité totale de tous les monomères dans le copolymère,
- le copolymère présente un poids moléculaire pondéral moyen M_{w} de 0,5*10⁶ g/mole à 30*10⁶ g/mole,
- la quantité de copolymère dans la formulation aqueuse est de 0,1 à 3% en poids,
- la température du gisement est de 30°C à 120°C,
- et la formulation contenant en outre des composants solubles dans l'eau qui peuvent provoquer une réticulation du polymère dans les conditions du gisement et la température de la formulation aqueuse de copolymère à injecter étant choisie de manière telle qu'elle est inférieure à la température du gisement.

2. Procédé selon la revendication 1, **caractérisé en ce que** le copolymère comprend des monomères (b1) ainsi que (b2a) mais pas de monomères (b2b).

3. Procédé selon la revendication 1, **caractérisé en ce que** le copolymère comprend des monomères (b1) ainsi que (b2b) mais pas de monomères (b2a).

4. Procédé selon l'une quelconque des revendications 1 à 3, **caractérisé en ce que** la température du gisement est de 40°C à 100°C.

5. Procédé selon l'une quelconque des revendications 1 à 3, **caractérisé en ce que** la température du gisement est de 45°C à 90°C.

6. Procédé selon l'une quelconque des revendications 1 à 5, **caractérisé en ce qu'**on injecte la formulation aqueuse à une vitesse de cisaillement d'au moins 30 000 s⁻¹ dans la formation.

7. Procédé selon l'une quelconque des revendications 1 à 6, **caractérisé en ce qu'**il s'agit, pour le monomère s'associant de manière hydrophobe (a), d'au moins un monomère de formule (I)
R⁴ représentant un radical hydrocarboné comprenant 3 à 10 atomes de carbone,
k représentant un nombre de 12 à 100 et
R⁵ représentant H, méthyle ou éthyle.

8. Procédé selon la revendication 7, **caractérisé en ce qu'**il s'agit pour
R⁴ d'un radical n-propyle,
k d'un nombre de 15 à 80 et
R⁵ de H.

9. Procédé selon l'une quelconque des revendications 1 à 8, **caractérisé en ce qu'**il s'agit, pour les composants réticulants, d'au moins un composé soluble dans l'eau choisi dans le groupe constitué par
- des composés contenant des ions métalliques divalents, trivalents ou tétravalents,
- de composés organiques présentant au moins deux groupes amino,
- d'aldéhydes.

10. Procédé selon l'une quelconque des revendications 1, 2 ainsi que 4 à 8, **caractérisé en ce que** le copolymère comprend en outre au moins un monomère (b3) cationique, éthyléniquement monoinsaturé présentant des ions ammonium.

11. Procédé selon la revendication 10, **caractérisé en ce qu'**il s'agit, pour le monomère cationique (b3), de sels de 3-triméthylammoniumpropyl(méth)acrylamides, de dialkyldiallylammonium et de (méth)acrylates de 2-triméthylammoniuméthyle.

12. Procédé selon la revendication 10 ou 11, **caractérisé en ce que** les monomères neutres (b1) sont utilisés en une quantité de 30 à 95% en poids et les monomères anioniques (b2a) et les monomère cationiques (b3) sont utilisés ensemble en une quantité de 4,9 à 69,9% en poids, à condition que le rapport molaire (b2a)/(b3) vaille 0,7 à 1,3 et les quantités se rapportant à chaque fois à la quantité totale de tous les monomères utilisés.

13. Procédé selon l'une quelconque des revendications 1 ainsi que 3 à 9, **caractérisé en ce qu'**il s'agit, pour le radical alkyle R¹⁶
- d'un radical alkyle secondaire -CH(R¹⁷)(R^{17'}), R¹⁷ et R^{17'} représentant des radicaux alkyle linéaires ou ramifiés, à condition que le nombre total d'atomes de carbone dans les radicaux R¹⁷ et R^{17'} soit de 2 à 7, et/ou
- d'un radical alkyle tertiaire -C(R¹⁸)(R^{18'})(R^{18"}), R¹⁸, R^{18'} et R^{18"} représentant des radicaux alkyle linéaires ou ramifiés, à condition que le nombre total d'atomes de carbone dans les radicaux R¹⁸, R^{18'} et R^{18"} soit de 3 à 7.

14. Procédé selon l'une quelconque des revendications 1 ainsi que 3 à 9, **caractérisé en ce qu'**il s'agit, pour le monomère (b2b), de l'ester t-butylique de l'acide (méth)acrylique.

15. Procédé selon l'une quelconque des revendications 1 à 14, **caractérisé en ce qu'**on injecte, dans l'étape de procédé (1), via le trou d'injection puis on réalise l'étape de procédé (2).

16. Procédé selon la revendication 15, **caractérisé en ce qu'**il s'agit, dans l'étape de procédé (2), d'inondation à l'eau.

17. Procédé selon l'une quelconque des revendications 1 à 14, **caractérisé en ce qu'**on réalise d'abord l'étape de procédé (2), après l'augmentation de la production d'eau, on réalise l'étape de procédé (1) par injection dans le trou de production puis on continue l'extraction de pétrole par une nouvelle réalisation de l'étape de procédé (2).
